# EUROPEAN PATENT APPLICATION

(11) **EP 4 841 967 A1**
(43) Date of publication of application: **18.11.2026**
(21) Application number: 25870530.0
(22) Date of filing: 30.07.2025
(51) Int. Cl.: H04N 9/31, H04N 9/73

(54) **IMAGE PROCESSING METHOD, APPARATUS, DEVICE AND STORAGE MEDIUM**

(30) Priority: 26.09.2024 CN 202411352197
(71) Applicant: Tencent Technology (Shenzhen) Company Limited, Shenzhen, Guangdong 518057 (CN)
(72) Inventor: YANG, Weiming, Shenzhen, Guangdong 518057 (CN); GUO, Runzeng, Shenzhen, Guangdong 518057 (CN); HOU, Jinkun, Shenzhen, Guangdong 518057 (CN); WANG, Shaoming, Shenzhen, Guangdong 518057 (CN); WANG, Jun, Shenzhen, Guangdong 518057 (CN)
(74) Representative: AWA Sweden AB
(86) International application number: PCT/CN2025/111494
(87) International publication number: WO 2026/066625

(57) **Abstract**

An image processing method, executed by an electronic device and comprising : performing object detection on an image to be processed, so as to determine a pixel-region of interest in the image to be processed; performing color temperature value estimation on the basis of a non-pixel-region of interest other than the pixel-region of interest in the image to be processed, so as to determine an estimated light source color temperature value of the image to be processed; on the basis of the estimated light source color temperature value of the image to be processed and historical light source color temperature values of reference images, determining a white balance gain for the image to be processed, wherein the reference images and the image to be processed are acquired by a same image acquisition device, the reference images comprising at least one of K image frames acquired by the image acquisition device before the image to be processed, and K being a positive integer; and, on the basis of the white balance gain for the image to be processed, performing color correction at least on the pixel-region of interest in the image to be processed.

## Description

### RELATED APPLICATION

This application claims priority to Chinese Patent Application No. 202411352197.5, filed on September 26, 2024 and entitled "IMAGE WHITE BALANCE PROCESSING METHOD AND APPARATUS, DEVICE, AND STORAGE MEDIUM", which is incorporated herein by reference in its entirety.

### FIELD OF THE TECHNOLOGY

This application relates to the field of image processing technologies, and more specifically, to an image processing method and apparatus, a device, and a storage medium.

### BACKGROUND OF THE DISCLOSURE

With progress of image processing technologies, image photographing devices such as cameras and mobile phones are widely used. Image quality is affected by light sources in an environment. Consequently, a color cast of an image occurs.

In the related art, a white balance method is mainly used to resolve a color cast of an image, but the quality of a color-corrected image in the related art is still not good enough.

### SUMMARY

In view of this, embodiments of this application provide an image processing method and apparatus, a device, and a storage medium, so that a color of a region of interest in a color-corrected image can be more accurate.

According to a first aspect, an embodiment of this application provides an image processing method, executable by an electronic device, and including: performing an object detection on an input image, to determine a pixel-region of interest in the input image; performing a color temperature value estimation based on a non-pixel-region of interest other than the pixel-region of interest in the input image, to determine an estimated light source color temperature value of the input image; determining a white balance gain for the input image based on the estimated light source color temperature value of the input image and a historical light source color temperature value of a reference image, the reference image and the input image being acquired by a same image acquisition device; and the reference image including at least one of K frames of images acquired by the image acquisition device before acquiring the input image, K being a positive integer; and performing a color correction on at least the pixel-region of interest in the input image based on the white balance gain for the input image.

According to a second aspect, an embodiment of this application provides a color correction apparatus, including a region determining module, a color temperature value estimation module, a gain determining module, and a color correction module. The region determining module is configured to perform an object detection on an input image, to determine a pixel-region of interest in the input image; the color temperature value estimation module is configured to perform a color temperature value estimation based on a non-pixel-region of interest other than the pixel-region of interest in the input image, to determine an estimated light source color temperature value of the input image; the gain determining module is configured to determine a white balance gain for the input image based on the estimated light source color temperature value of the input image and a historical light source color temperature value of a reference image, the reference image and the input image being acquired by a same image acquisition device; and the reference image including at least one of K frames of images acquired by the image acquisition device before acquiring the input image, K being a positive integer; and the color correction module is configured to perform a color correction on at least the pixel-region of interest in the input image based on the white balance gain for the input image.

According to a third aspect, an embodiment of this application provides an electronic device, including a processor and a memory, the memory having computer-readable instructions stored therein, the computer-readable instructions, when executed by the processor, implementing the foregoing method.

According to a fourth aspect, an embodiment of this application provides a non-transitory computer-readable storage medium, having computer-readable instructions stored therein, the computer-readable instructions, when executed by a processor, implementing the foregoing method.

According to a fifth aspect, an embodiment of this application provides a computer program product, including computer-readable instructions, the computer-readable instructions, when executed by a processor, implementing operations of the foregoing method.

Details of one or more embodiments of this application are provided in the following drawings and descriptions. Other features, objectives, and advantages of this application become apparent in the specification, the accompanying drawings, and the claims.

### BRIEF DESCRIPTION OF THE DRAWINGS

To describe the technical solutions in the embodiments of this application more clearly, the following briefly describes the accompanying drawings required for describing the embodiments. Apparently, the accompanying drawings in the following descriptions show merely some embodiments of this application, and a person of ordinary skill in the art may derive other accompanying drawings from the disclosed accompanying drawings without creative.
FIG. 1 is a block diagram of an electronic device according to an embodiment of this application.
FIG. 2 is a schematic flowchart of an image processing method according to an embodiment of this application.
FIG. 3 is a schematic flowchart of operation S110 in FIG. 2.
FIG. 4 is a schematic flowchart of operation S120 in FIG. 2.
FIG. 5 is a schematic diagram of a Planck's curve in a CIE xy chrominance coordinate system according to an embodiment of this application.
FIG. 6 is a schematic diagram of a color gamut of an RGB camera under different color temperature conditions according to an embodiment of this application.
FIG. 7 is a schematic flowchart of operation S130 in FIG. 2.
FIG. 8 is a schematic structural diagram of an electronic device according to an embodiment of this application.
FIG. 9 is another schematic flowchart of an image processing method according to an embodiment of this application.
FIG. 10 is a schematic flowchart of operation S180 in FIG. 9.
FIG. 11 is a schematic structural diagram of an object detection model according to an embodiment of this application.
FIG. 12 is a schematic diagram of application of an electronic device configured to perform a method according to an embodiment of this application.
FIG. 13 shows images obtained after color correction is performed on images acquired for a palm at different color temperatures in the related art.
FIG. 14 is a schematic diagram of performing palm scanning payment processing through a processor according to an embodiment of this application.

### DESCRIPTION OF EMBODIMENTS

Technical solutions of embodiments of this application will be clearly and completely described below with reference to the accompanying drawings of embodiments of this application. Apparently, the embodiments described are merely some embodiments rather than all embodiments of this application. All other embodiments obtained by a person of ordinary skill in the art based on the embodiments of this application without creative efforts shall fall within the protection scope of this application.

In addition, the described features, structures, or characteristics may be combined in one or more embodiments in any appropriate manner. In the following descriptions, many specific details are provided for comprehensive understanding of the embodiments of this application. However, a person of ordinary skill in the art is to be aware that the technical solutions in this application may be implemented without one or more of the particular details, or may be implemented by using another method, unit, apparatus, operation, or the like. In other cases, well-known methods, apparatuses, implementations, or operations are not shown or described in detail to avoid obscuring aspects of this application.

Block diagrams shown in the accompanying drawings are merely functional entities and do not necessarily correspond to physically independent entities. To be specific, these functional entities may be implemented in a software form, or in one or more hardware modules or integrated circuits, or in different networks and/or processor apparatuses and/or microcontroller apparatuses.

Flowcharts shown in the accompanying drawings are merely exemplary descriptions, do not necessarily include all content and operations/steps, and are not necessarily performed in the described sequences either. For example, some operations/steps may be further divided, while some operations/steps may be combined or partially combined. Therefore, an actual performing sequence may change based on an actual situation. In the following descriptions, related "some embodiments or some implementations" describe a subset of all possible embodiments. However, the "some embodiments" may be the same subset or different subsets of all the possible embodiments, and may be combined with each other without conflict.

"Plurality of" mentioned in this specification means two or more.

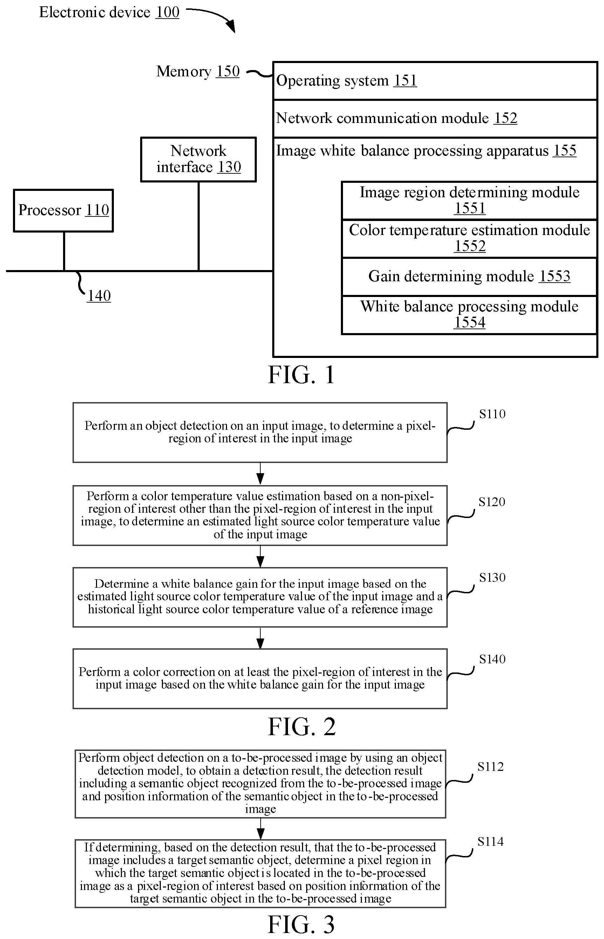

The following describes example application of an image processing method provided in this application. The image processing method provided in this application may be applied to an electronic device shown in FIG. 1.

FIG. 1 is a schematic structural diagram of an electronic device 100 according to an embodiment of this application. The electronic device 100 may be a terminal device or a server, and the electronic device may be configured to perform the image processing method provided in this application.

In the embodiments of the present disclosure including the embodiments of both the claims and the specification (hereinafter referred to as "all embodiments of the present disclosure"), the server may be an independent physical server, a server cluster or distributed system including a plurality of physical servers, or a cloud server that provides a basic cloud computing service such as a cloud service, a cloud database, cloud computing, a cloud function, cloud storage, a network service, cloud communication, a middleware service, a domain name service, a security service, a content delivery network (CDN), big data, and an artificial intelligence platform.

The terminal device may be a smart phone, a tablet computer, a notebook computer, an on-board terminal, a payment terminal (for example, a palm scanning payment terminal or a face payment terminal), an access control device, or the like, but is not limited thereto. An image acquisition apparatus is disposed on the terminal device, to perform image acquisition to obtain a to-be-processed image (hereinafter referred to as "an input image" in the following).

The electronic device 100 shown in FIG. 1 includes: at least one processor 110, a memory 150 and at least one network interface 120. All components in the electronic device 100 are coupled together via a bus system 140. The bus system 140 is configured to implement connection communication between the components. In addition to a data bus, the bus system 140 further includes a power supply bus, a control bus, and a status signal bus. However, for clear description, the various buses are marked as the bus system 140 in FIG. 1.

The processor 110 may be an integrated circuit chip with a signal processing capability, such as a general-purpose processor, a digital signal processor (DSP), or another programmable logic device, a discrete gate, a transistor logic device, or a discrete hardware component. The general-purpose processor may be a microprocessor, any conventional processor, or the like.

The memory 150 is removable, non-removable, or a combination thereof. For example, a hardware device includes a solid-state memory, a hard disk drive, an optical disk drive, and the like. In all embodiments of the present disclosure, the memory 150 includes one or more storage devices physically located away from the processor 110.

The memory 150 may include a volatile memory or a non-volatile memory, or may include both a volatile memory and a non-volatile memory. The non-volatile memory may be a read only memory (ROM), and the volatile memory may be a random access memory (RAM). The memory 150 described in all embodiments of the present disclosure is to include any other suitable types of memories.

In all embodiments of the present disclosure, the memory 150 can store data to support various operations. An example of the data includes a program, a module, and a data structure, a subset or a superset thereof. Example descriptions are provided below.

An operating system 151 includes a system program for processing various basic system services and executing a hardware-related task, for example, a framework layer, a core library layer, and a driver layer, and is configured to implement various basic services and process a hardware-based task.

A network communication module 152 is configured to connect to other computer devices via one or more (wired or wireless) network interfaces 120. The example network interfaces 120 include Bluetooth, Wi-Fi, universal serial bus (USB), and the like.

In all embodiments of the present disclosure, the image processing method provided in the embodiments of this application may be implemented by software. FIG. 1 shows an image processing apparatus 155 stored in the memory 150, which may be software in a form of a program and a plug-in, and includes the following software modules: an image region determining module 1551, a color temperature value estimation module 1552, and a gain determining module 1553, and a color correction module 1554. The modules are logical, and therefore, may be combined in different manners or further split based on to-be-implemented functions. Functions of the modules are described in the following specification.

The method provided in all embodiments of the present disclosure is described in combination with example applications and implementations of the electronic device provided in the embodiments of this application.

FIG. 2 shows an image processing method provided in this application. The method may be applied to an electronic device. The electronic device may be the foregoing terminal device or server. The method includes the following operations.

Operation S110: Perform an object detection on a to-be-processed image, to determine a pixel-region of interest in the to-be-processed image. In the following, the "to-be-processed image" may be referred to as "an input image". That is, Operation S110: Perform an object detection on an input image, to determine a pixel-region of interest in the input image.

The to-be-processed image is an image on which color correction needs to be performed. The to-be-processed image may be an image acquired by an image acquisition apparatus in real time. The to-be-processed image may be an RGB image or an infrared image.

For example, the to-be-processed image may be an acquired face image, or may be an acquired palm image, or may be an image acquired for a body part, a vehicle, an animal, a pedestrian, an urban building, natural scenery, or the like.

Object detection is an important task in computer vision, and aims to recognize a specific type of object in an image and a position of the object in the image.

The pixel-region of interest in the to-be-processed image is a pixel region in which a semantic object of interest (where the semantic object of interest is an object of interest) is located in the to-be-processed image. Object detection is performed on the to-be-processed image, to recognize whether the semantic object of interest exists in the to-be-processed image and position information of the semantic object of interest in the to-be-processed image. The position information of the semantic object of interest in the to-be-processed image may be indicated by a position of a detection box surrounding the pixel region of the semantic object. The detection box may be a rectangular detection box.

The object of interest may be set based on a requirement, and the object of interest may be a palm print, a face, or the like. There may be one or more set objects of interest.

A region in the to-be-processed image other than the pixel-region of interest is a non-pixel-region of interest. The pixel-region of interest usually includes information about which a user or an application is most concerned, such as a face, a specific object, or an identifier. The non-region of interest usually includes background information or another secondary element.

When object detection is performed on the to-be-processed image, there may be one or more determined pixel-regions of interest in the to-be-processed image. If there is a plurality of determined pixel-regions of interest, semantic objects in the regions of interest may be different.

In operation S110, an object detection model may perform object detection on the to-be-processed image, and the pixel-region of interest is determined in the to-be-processed image based on a detection result output by the object detection model. The object detection model may be a deep learning model, for example, a model that can perform object detection, such as a mask region convolutional neural network (Mask R-CNN) or a U-type convolutional neural network

(U-Net). A process of performing object detection means performing semantic recognition on an image, to recognize whether the image includes an object of interest and a position of the object of interest in the image when the object of interest exists in the image.

In an implementation, referring to FIG. 3, operation S110 includes operation S112 to S114.

Operation S112: Perform an object detection on the to-be-processed image by using the object detection model, to obtain the detection result, the detection result including the semantic object recognized from the to-be-processed image and the position information of the semantic object in the to-be-processed image.

The object detection model may include a feature extraction network and a classification layer. When object detection is performed on the to-be-processed image by using the object detection model, a specific process is as follows:

performing feature extraction on the to-be-processed image via the feature extraction network in the object detection model, to obtain an image feature of the to-be-processed image. When the feature extraction network in the object detection model is a convolutional neural network (CNN), image block encoded sequences are sequentially arranged into a form of a two-dimensional matrix to be input into the CNN. First, a convolution operation is performed on the input image block encoded sequences through a plurality of convolutional layers. Each convolutional layer includes a plurality of convolution kernels, and the convolution kernels slide on the image block encoded sequences to perform convolutional computation, so as to extract features in different scales and directions. Then downsampling is performed on an output of the convolutional layer by using a pooling layer (for example, max pooling), to reduce a size of a feature map and retain important feature information. After multi-layer convolution and pooling operations are performed, the image feature of the to-be-processed image is obtained. If the feature extraction network is a Transformer network, position encoding information is added to each image block encoding vector in the image block encoded sequences, to retain a spatial position relationship of image blocks. Then, these vectors are input into a multi-head self-attention mechanism of the Transformer network, attention scores between each vector and the other vectors are calculated, and a context representation of each vector is obtained by means of weighted summation. Next, nonlinear transformation is performed on the context representation through a feedfoward neural network, and multi-head self-attention and feedfoward neural network operations are repeated for a plurality of times, to finally obtain the image feature of the to-be-processed image. The multi-head self-attention mechanism is a key component in the Transformer network. During feature extraction by the object detection model, after the position encoding information is added to each image block encoding vector in the image block encoded sequences, the vectors are input into the mechanism. The attention scores between each vector and the other vectors are calculated, and the context representation of each vector is obtained by means of weighted summation. This helps the model to capture a long-distance dependency relationship and context information in the image.

Then, the to-be-processed image is classified by using the classification layer in the object detection model based on the image feature of the to-be-processed image, to obtain the semantic object of the to-be-processed image and the position information of the semantic object in the to-be-processed image.

In all embodiments of the present disclosure, before the to-be-processed image is input into the object detection model, the method may further include: performing block processing on the to-be-processed image, to obtain an image block sequence of the to-be-processed image; and then encoding the image block sequence of the to-be-processed image, to obtain the image block encoded sequence of the to-be-processed image. Operation S112 includes: performing feature extraction on the image block encoded sequence of the to-be-processed image via the feature extraction network in the object detection model, to obtain the image feature of the to-be-processed image. Then, object detection is performed on the to-be-processed image by using the classification layer in the object detection model based on the image feature of the to-be-processed image, to obtain the semantic object of the to-be-processed image and the position information of the semantic object in the to-be-processed image.

The image block encoded sequence is a sequence obtained by encoding each image block in the image block sequence after block processing is performed on the sample image or the to-be-processed image to obtain the image block sequence. An encoding manner may be performing linear encoding and position encoding on the image blocks to obtain a final image encoded sequence, or combining linear code and position code after performing linear encoding and position encoding on the image blocks, to obtain a final image encoded sequence, or calculating a color gradient based on a color value of each pixel in the image blocks, to determine and splice HOG features of the image blocks. The sequence is configured for feature extraction performed by the feature extraction network in the object detection model, to help the model to capture a local feature in more detail, thereby improving detection precision, reducing a computing load, and accelerating a training speed. The color gradient is information that is obtained through calculation based on the color value of each pixel in the image blocks and that reflects a direction and an amplitude of a color change of the pixel. By calculating the color gradient, a gradient direction and a gradient amplitude of the pixel may be obtained, to determine the HOG features of the image blocks.

When block processing is performed on the to-be-processed image to obtain the image block sequence, the to-be-processed image may be divided into image blocks of a fixed size, and the image blocks are arranged based on a spatial order of the image blocks (for example, image blocks in different rows in the to-be-processed image are arranged in order from top to bottom, and image blocks in the same row in the to-be-processed image are arranged in order from left to right) to obtain the image block sequence.

The to-be-processed image is divided into a plurality of image blocks, and subsequently, the feature extraction network in the object detection model may perform feature extraction on the plurality of image blocks in parallel. In this way, object detection efficiency of the object detection model can be improved. In addition, resolution of the image blocks is less than resolution of the entire to-be-processed image. Compared with performing feature extraction by using the to-be-processed image as a unit, calculation complexity of performing feature extraction by using the image block as a unit is lower, and detailed information in the to-be-processed image can be retained.

In an implementation, encoding the image blocks in the image block sequence may specifically be performing linear encoding and position encoding on the image blocks to obtain the final image encoded sequence, or combining the linear code and the position code after performing linear encoding and position encoding on the image blocks, to obtain the final image encoded sequence.

For example, position encoding may be performed on each image block in the image block sequence, to obtain position code of each image block. The position code of the image block is configured for representing a position of the image block in the to-be-processed image. Linear encoding is performed on each image block in the image block sequence, to obtain linear code of each image block. For each image block in the image block sequence, the position code and the linear code of the image block are combined, to obtain image code of the image block. The image codes of the plurality of image blocks are combined based on positions of the image blocks in the image block sequence, to obtain the image encoded sequence of the image block sequence.

When position encoding is performed on each image block in the image block sequence, for each image block, position information (for example, coordinates) of the image block relative to an entire position of the image is calculated, then the position information of the image block is converted into a code form, and then the code form of the position information of each image block may be combined with a pixel value or feature representation of the image block, to obtain the position code of the image block. When linear encoding is performed on each image block in the image block sequence, linear transformation may be performed on the image block, to obtain a result after linear transformation is performed, and the result is a linear encoding feature of the image block.

When linear encoding is performed on each image block in the image block sequence, linear transformation is performed by using a principal component analysis (PCA) method. Specific operations are as follows. First, the image block is expanded into a one-dimensional vector. Then, a covariance matrix of the vectors of all the image blocks is calculated. Next, feature value decomposition is performed on the covariance matrix. Feature vectors corresponding to first *k* maximum feature values are selected as principal components, the vector of each image block is projected onto the *k* principal components, and an obtained projection coefficient vector is the linear encoding feature of the image block. A value of *k* is determined based on an experiment, to balance a feature dimension and an information retaining degree.

The foregoing manner of combining the position code and the linear code of the image block may be splicing or multiplying the position code and the linear code of the image block, performing bitwise addition on the position code and the linear code of the image block, or the like.

Position encoding is performed on the image blocks, so that subsequently the feature extraction network can better understand and use the position information of the image blocks in the to-be-processed image, Therefore, spatial information and a structure in the to-be-processed image can be captured, helping the feature extraction network to better understand and use a spatial relationship and the context information in the to-be-processed image. Linear encoding is performed on the image blocks, so that the feature extraction network can capture continuous features and modes in the to-be-processed image, thereby improving understanding and classification accuracy of content in the to-be-processed image.

In another implementation, encoding the image blocks in the image encoded sequence may specifically further be: performing color gradient calculation on each pixel in the image blocks based on the color value of each pixel in the image blocks, to obtain the gradient direction and the gradient amplitude of the pixel; and determining the histogram of oriented gradients (HOG) features of the image blocks based on the gradient direction and the gradient amplitude of each pixel in the image blocks, and splicing the HOG features of the image blocks in the image block sequence based on the order of the image blocks in the image block sequence, to obtain the image block encoded sequence. The histogram of oriented gradients is a feature representation method determined based on the gradient direction and the gradient amplitude of each pixel in the image blocks. The HOG features of the image blocks in the image block sequence are spliced based on the order of the image blocks in the image block sequence, to obtain the image block encoded sequence. The feature can effectively capture semantics of the to-be-processed image, and a calculation amount is small, thereby reducing calculation consumption of the terminal device.

Block processing is performed on the to-be-processed image, the HOG feature is extracted from each image block, and the HOG features of the image blocks are combined into a large one-dimensional vector (the image block encoded sequence). Therefore, the image block encoded sequence includes color gradient information in the to-be-processed image, so that the semantics of the to-be-processed image can be effectively captured when feature extraction is subsequently performed based on the image block encoded sequence. In addition, the HOG features of the image blocks are extracted with a small calculation amount, especially when the solution of this application is applied to the terminal device, so that calculation consumption of the terminal device can be reduced.

Operation S114: If determining, based on the detection result, that the to-be-processed image includes a target semantic object, determine a pixel region in which the target semantic object is located in the to-be-processed image as the pixel-region of interest based on position information of the target semantic object in the to-be-processed image.

The target semantic object is the foregoing semantic object of interest. If the position information of the target semantic object in the to-be-processed image indicates position information of a detection box of the target semantic object, a pixel region in which the target semantic object is located in the to-be-processed image may be considered as a pixel region in the bounding box, namely, the pixel-region of interest.

The pixel-region of interest in which the target semantic object is located in the to-be-processed image may be a pixel region that needs to be focused on subsequently, for example, on which further image processing is performed. Therefore, if the to-be-processed image does not include the target semantic object, color correction does not need to be performed on the to-be-processed image subsequently, to avoid ineffective color correction for the to-be-processed image. Subsequently, a next image of the to-be-processed image may be obtained as a new to-be-processed image, and is processed based on the foregoing process.

Operation S120: Perform a color temperature value estimation based on the non-pixel-region of interest other than the pixel-region of interest in the to-be-processed image (e.g., the input image), to determine an estimated light source color temperature value of the to-be-processed image (e.g., the input image).

The estimated light source color temperature value of the to-be-processed image is a color temperature that is of a light source in an environment from which the to-be-processed image comes and that is determined through color temperature value estimation.

A color temperature is a unit of measurement indicating a color component included in light, and is an important parameter for describing a color characteristic of a light source. Colors of light emitted by light sources of different color temperatures are different. The color temperature is defined based on a blackbody radiation principle. When a color of light emitted by a light source is the same as a color of radiation generated by a blackbody that is heated to a certain temperature, the temperature of the blackbody is defined as a color temperature of the light source. If a difference between a color of the semantic object of interest (that is, the foregoing target semantic object) and a color of light emitted by a light source is small, for example, if the target semantic object is a palm, a face, or the like, where the color is yellow or near-yellow, and the color of the light of the light source is usually also yellow, a color difference is small, then, a determined estimated light source color temperature value is inaccurate if the pixel-region of interest in which the target semantic object is located in the to-be-processed image is used for color temperature value estimation. Therefore, in this application, to avoid inaccurate color temperature value estimation due to the small difference between the color of the target semantic object and the color of the light source, the non-pixel-region of interest in the to-be-processed image is used for color temperature value estimation.

In all embodiments of the present disclosure, before operation S120 is performed, the method may further include: performing mask processing on each pixel in the pixel-region of interest in the to-be-processed image, to set a color value of each pixel in the pixel-region of interest to a specified color value. An influence degree of the specified color value on color temperature value estimation may be less than an influence degree threshold. For example, the specified color value may be black.

When the pixel-region of interest is set to a specified color (for example, black), although pixels in the pixel-region of interest still exist in the to-be-processed image, a color attribute of the pixel-region of interest no longer reflects actual color information of the region of interest because the color has been modified. Subsequently, the pixel region of the specified color value may not be used for color temperature value estimation.

In an implementation, operation S120 may be: performing color temperature value estimation on the non-pixel-region of interest other than the pixel-region of interest in the to-be-processed image through a pre-trained color temperature recognition model, to obtain the estimated light source color temperature value of the to-be-processed image.

The color temperature recognition model is obtained through training based on a plurality of color temperature sample images having a color temperature label. A training process of the color temperature recognition model is: performing feature extraction on the color temperature sample image via a feature extraction network in the color temperature recognition model, to obtain an image feature; and performing classification based on the image feature through a classification network in the color temperature recognition model, to obtain a color temperature prediction result of the color temperature sample image, obtaining a loss value based on the color temperature prediction result and the color temperature label, and adjusting a model parameter of the color temperature recognition model based on the loss value. A neural network used in the color temperature recognition model may be, but is not limited to, a residual network (ResNet), a visual geometry group network (VGG), an inception convolutional neural network (Inception), and the like.

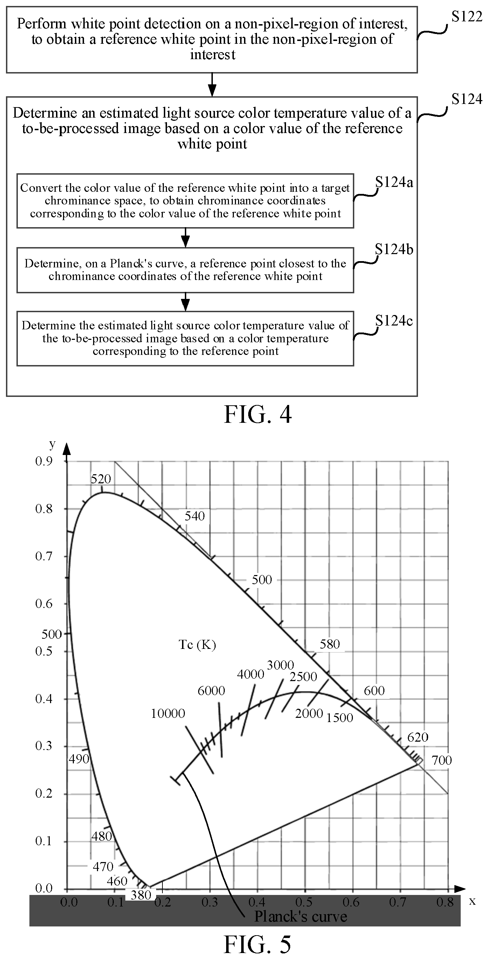

In another implementation, referring to FIG. 4, operation S120 includes the following operations.

Operation S122: Perform white point detection on the non-pixel-region of interest, to obtain a reference white point in the non-pixel-region of interest.

An image on which white point detection is performed is an RGB image. If the to-be-processed image is not an RGB image, the to-be-processed image may be first converted into the RGB image. The RGB image is an image constructed by using an RGB color mode. The RGB color mode is a color standard in the industry. Three color channels of red, green, and blue are changed and superimposed with each other to obtain images of various colors.

A method for white point detection may include a max-RGB method.

When white point detection is performed on the non-region of interest of the to-be-processed image by using the max-RGB method, specifically, for each pixel in the non-region of interest of the to-be-processed image, based on values of each pixel for three channels, R, G, and B, pixels of which sums of the values of the channels in the non-region of interest of the to-be-processed image are greater than a preset threshold are sorted in order of maximum values of the values of the channels of the pixels, and first N pixels are used as reference white points. N is an integer greater than 1. Specifically, from all the pixels in the non-region of interest of the to-be-processed image, the first N pixels, for example, (255, 255, 255), (255, 255, 254), or (254, 255, 255), are selected when the pixels of which the sums of the values of the three channels, R, G, and B, are greater than the preset threshold are sorted in order of max(R, G, B). max(R, G, B) represents selecting a maximum value from the three channels of red, green, and blue. In an ideal case, pixels near white usually have high values in all three channels, and these values are close. Therefore, if a max(R, G, B) value of a pixel is close to 255, and values of three channels, R, G, and B, are not greatly different, the pixel is probably a pixel near white. The preset threshold may be obtained by statistical analysis based on a large amount of experimental data, and may ranges from 50K to 100K.

Operation S124: Determine the estimated light source color temperature value of the to-be-processed image based on a color value of the reference white point.

In an implementation, operation S124 may be: searching a preset correspondence table for an estimated light source color temperature value corresponding to the color value of the reference white point, the preset correspondence table having a plurality of color temperatures and color values corresponding to the color temperatures stored therein.

In an implementation, operation S124 includes the following operations.

Operation S124a: Convert the color value of the reference white point into a target chrominance space, to obtain chrominance coordinates corresponding to the color value of the reference white point.

The target chrominance space is a CIE xy chrominance coordinate system, and is derived from a CIE XYZ color space. In the CIE XYZ color space, three ideal primary colors are mathematically selected to replace three actual primary colors based on an RGB color space technology, so that each color can be described by using three values.

The CIE XYZ color space is defined by using three color matching functions, namely, X, Y, and Z. X represents a response of a red primary color. Y represents a response of a green primary color, and is usually considered as a component closest to perceived intensity of human eyes. Z represents a response of a blue primary color. In the CIE xy chrominance coordinate system, a color is represented as a point in a two-dimensional plane (an xy coordinate plane), and the point on the plane represents a chrominance attribute of the color but ignores intensity information. The xy coordinate plane is converted from the CIE XYZ color space by using the following conversion formula: x = *X* /(*X* +*Y* + *Z*) ; and y = *Y* /(*X* +*Y* + *Z*) .

When the color value of the reference white point is known, the color value of the reference white point may be converted, to obtain coordinates corresponding to the color value of the reference white point in the CIE XYZ color space, and the coordinates corresponding to the color value of the reference white point in the CIE XYZ color space are converted into CIE xy chrominance coordinates by using the conversion formula, to obtain a plane coordinate value. The plane coordinate value is the chrominance coordinates corresponding to the color value of the reference white point.

Operation S124b: Determine, on a Planck's curve, a reference point closest to the chrominance coordinates of the reference white point.

The Planck's curve is obtained based on Planck's law. Planck's law describes a relationship between energy distribution of blackbody radiation and a temperature. As shown in FIG. 5, when a color of blackbody radiation is converted into the CIE xy chrominance coordinate system, points in the CIE xy chrominance coordinate system corresponding to the color of blackbody radiation forms a continuous curve. The curve is the Planck's curve, that is, the points on the Planck's curve represent colors of blackbody radiation at different temperatures. When a temperature of a blackbody is low (for example, approximately 2000K), a color of radiation tends to be red. As the temperature increases, the color of blackbody radiation gradually changes to yellow, and then to white (for example, approximately 5500K). When the temperature of the blackbody is extremely high (for example, approximately 10000K), the color of radiation tends to be blue.

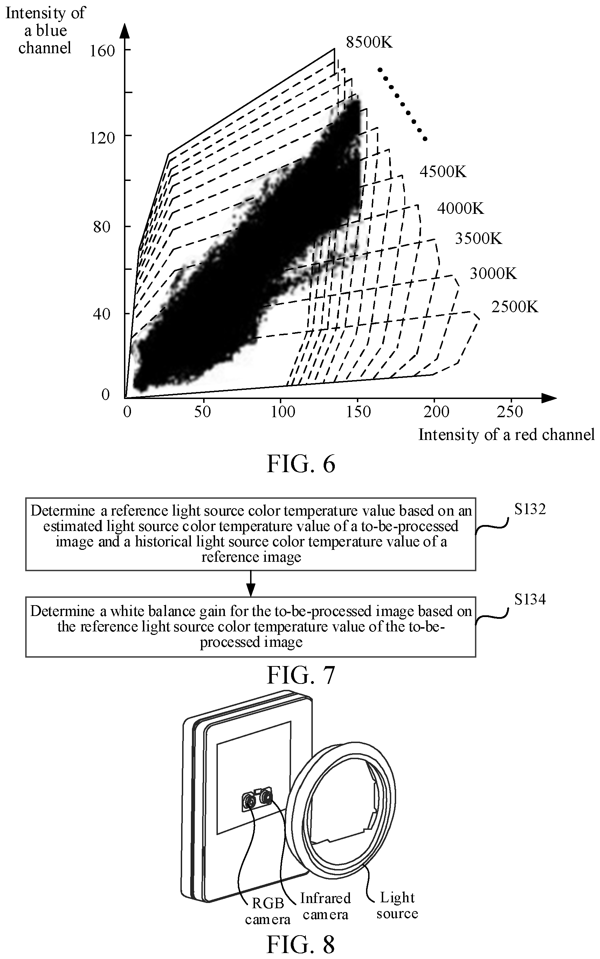

FIG. 6 shows a color gamut of an RGB camera under different color temperature conditions. A plurality of curves in FIG. 6 respectively represent changes of relative intensity of two color channels of red (R) and blue (B) under different color temperatures. A horizontal axis in FIG. 6 represents intensity of the red channel, and a vertical axis represents intensity of the blue channel. As shown in FIG. 6, as the color temperature changes, the intensity of the red and blue channels also changes. At a high color temperature (for example, 8500K), the intensity of the blue channel is larger. When the color temperature decreases, the intensity of the red channel gradually becomes larger and the intensity of the blue channel gradually becomes smaller.

In natural light or an artificial light source, color temperature characteristics of many light sources can be approximately described by using blackbody radiation. In other words, color temperatures of many common light sources (for example, sunlight, an incandescent lamp, and a fluorescent lamp) may be represented by an approximate point on the Planck's curve. Therefore, a color value of one reference white point is converted into CIE xy chrominance coordinates, and a point closest to the color value is found on the Planck's curve as a reference point. A color temperature corresponding to the reference point may be used as a color temperature of the reference white point.

Operation S124c: Determine the estimated light source color temperature value of the to-be-processed image based on the color temperature corresponding to the reference point.

There are one or more reference white points, and correspondingly, there are also one or more reference points.

If there is one reference white point, the color temperature of the reference point may be determined as the estimated light source color temperature value of the to-be-processed image.

If there are a plurality of reference white points, in an implementation, weighted calculation may be performed based on color temperatures corresponding to the reference white points, to obtain the estimated light source color temperature value of the to-be-processed image.

In another implementation, a median or an average of the color temperatures corresponding to the reference white points may be calculated to be used as the estimated light source color temperature value of the to-be-processed image.

In still another implementation, the plurality of reference white points may be clustered, to obtain a target category having a largest number of reference white points, and a median of color temperatures corresponding to the plurality of reference white points belonging to the target category is calculated, to obtain the estimated light source color temperature value of the to-be-processed image.

The plurality of reference white points may be clustered by using a K-means clustering algorithm. Specific operations are as follows.

Operation 1: Initialize cluster centers: Randomly select *K* reference white points as the initial cluster centers, where a value of *K* may be determined based on experience or experiments, for example, *K* = 3.

Operation 2: Allocate the reference white points to clusters: Calculate a distance (for example, a Euclidean distance) between each reference white point and the *K* cluster centers, and allocate each reference white point to a category of a closest cluster center.

Operation 3: Update the cluster centers: For each category, calculate a centroid of all reference white points in the category, and use the centroid as a new cluster center.

Operation 2 and operation 3 are repeated until the cluster centers no longer significantly change or a preset iteration number is reached.

Operation 4: Select the target category: Select a category having the largest number of reference white points as the target category, and calculate the median of the color temperatures corresponding to the plurality of reference white points belonging to the target category, to obtain the estimated light source color temperature value of the to-be-processed image.

By using the foregoing method, the estimated light source color temperature value of the to-be-processed image is accurately obtained based on a principle that a color temperature characteristic of an actual light source is similar to that of blackbody radiation.

Operation S130: Determine a white balance gain for the to-be-processed image (e.g., the input image) based on the estimated light source color temperature value of the to-be-processed image (e.g., the input image) and a historical light source color temperature value of a reference image.

The reference image and the to-be-processed image (e.g., the input image) are acquired by a same image acquisition device. The reference image includes at least one of K frames of images acquired by the image acquisition device before acquiring the to-be-processed image (e.g., the input image), and K is a positive integer.

The reference image may be an image that does not include the target semantic object, the target semantic object being the semantic object of interest, for example, may be a last image that is acquired before the to-be-processed image and that does not include the target semantic object.

In a feasible implementation, it is assumed that the estimated light source color temperature value of the to-be-processed image is *Tₑₛₜ,* and the historical light source color temperature value of the reference image is *Tₕᵢₛₜ*. First, a weighted average *T_{avg}* of the estimated light source color temperature value and the historical light source color temperature value is calculated, and a formula is *T_{avg}* = *ω*₁*Tₑₛₜ* + *ω*₂*Tₕᵢₛₜ*. *ω*₁ and *ω*₂ are weight coefficients, and *ω*₁ + *ω*₂ = 1. *ω*₁ is determined based on confidence of light source color temperature value estimation of the to-be-processed image, and *ω*₂ is determined based on a correlation between a number of reference images and acquisition time. Then, the white balance gain is determined by using a preset color temperature-gain mapping table. The mapping table is obtained based on a large amount of experimental data, and records gain values of three channels of red (*G_{R}*), green (*G_{G}*), and blue (*G_{B}*) corresponding to different color temperature values. Based on the *T_{avg}* obtained through calculation, the mapping table is searched for a gain value corresponding to a closest color temperature value, and is used as the white balance gain for the to-be-processed image.

In an implementation, referring to FIG. 7, operation S130 may include operation S132: Determine a reference light source color temperature value based on the estimated light source color temperature value of the to-be-processed image and the historical light source color temperature value of the reference image.

Operation S132 may specifically be: performing median filtering on the estimated light source color temperature value of the to-be-processed image and the historical light source color temperature value of the reference image, to obtain the reference light source color temperature value of the to-be-processed image.

Median filtering is a non-linear filtering technology. Median filtering is performed on a currently estimated color temperature and a historical color temperature to smooth a change in the color temperature, thereby avoiding severe fluctuation of subsequent white balance adjustment caused by an abnormality of a single estimated value.

Alternatively, operation S132 may specifically be: performing weighted summation on the estimated light source color temperature value of the to-be-processed image and the historical light source color temperature value of the reference image, to obtain a reference light source color temperature value.

When weights are set for the estimated light source color temperature value of the to-be-processed image and the historical light source color temperature value of the reference image, the weight of the estimated light source color temperature value of the to-be-processed image may be determined based on the number of reference images, and the weight of the historical light source color temperature value of each reference image may be set based on acquisition interval duration between each reference image and the to-be-processed image. The number of reference images is positively correlated with the weight of the estimated light source color temperature value of the to-be-processed image. That is, a larger number of reference images indicates a smaller weight of the estimated light source color temperature value of the to-be-processed image. The acquisition interval duration corresponding to the reference image is negatively correlated with the weight of the historical light source color temperature value of the reference image. That is, longer acquisition interval duration corresponding to the reference image indicates a smaller weight of the historical light source color temperature value of the reference image. A sum of the weight of the estimated light source color temperature value of the to-be-processed image and the weight of the historical light source color temperature value of the reference image is 1.

The reference light source color temperature value of the to-be-processed image is obtained by means of weighted summation, so that a final estimated color temperature value can be more stable. Even if a currently estimated value is affected by noise, historical data can help smooth these fluctuations. Therefore, a sudden color temperature change caused by a sudden ambient light change is avoided.

Operation S132 may alternatively be: determining whether an absolute value of a difference between the estimated light source color temperature value of the to-be-processed image and the historical light source color temperature value of the reference image is less than a preset difference threshold. If the absolute value of the difference is less than the preset difference threshold, the estimated light source color temperature value of the to-be-processed image is determined as the reference light source color temperature value. If the absolute value of the difference is not less than the preset difference threshold, weighted summation is performed on the estimated light source color temperature value of the to-be-processed image, to obtain a reference light source color temperature value.

When there are a plurality of reference images, the foregoing manner of determining whether the difference between the estimated light source color temperature value of the to-be-processed image and the historical light source color temperature value of the reference image is less than the preset difference threshold may be: determining whether an average or a median of absolute values of differences between the estimated light source color temperature value of the to-be-processed image and historical light source color temperature values of the reference images is less than the preset difference threshold.

Operation S134: Determine the white balance gain for the to-be-processed image based on the reference light source color temperature value of the to-be-processed image.

An objective of white balance is to make an image look natural under different lighting conditions, that is, an originally white object can be presented in white in any light source.

To achieve a white balance effect, white balance gains of three channels of red (R), green (G), and blue (B) usually need to be obtained.

In an implementation, gain ratios of the channels, R, G, and B, relative to a reference channel may be calculated. For example, one channel is selected as a reference, and then gain ratios of the other two channels relative to the reference channel are calculated. Specifically, operation S134 may be: after white point detection is performed on the non-pixel-region of interest of the to-be-processed image to obtain the plurality of reference white points, selecting, from the plurality of reference white points, a target reference white point closest to a point on the Planck's curve corresponding to the reference light source color temperature value. Based on intensity values of color channels of the target reference white point, a channel having a largest intensity value among the three channels of red (R), green (G), and blue (B) may be selected as the reference channel, or a middle channel (green) may be selected as the reference channel. After the reference channel is selected, a ratio of the intensity value of each channel of the target reference white point to the intensity value of the reference channel may be determined as a gain of each channel.

For example, if a pixel value of a target reference white point is (220, 210, 180), and if a selected reference channel is an R channel, a gain of a G channel G_gain=210/220, and a gain of a B channel B_gain=180/220. If a selected reference channel is a G channel, a gain of an R channel R_gain=220/210, and a gain of a B channel B_gain=180/210.

In another implementation, operation S134 may alternatively be: determining the white balance gain for the to-be-processed image based on the reference light source color temperature value and a reference color temperature of the to-be-processed image. Specifically, the reference color temperature is a color temperature of neutral white light, and has any value, for example, from 5400K to 5600K. For example, the reference color temperature may be set to 5500K. Then, a gain of each color channel may be calculated based on a difference between the reference light source color temperature value and the reference color temperature.

For example, a gain G_gain of a G channel may be determined according to a formula: R_gain=1+(T-T0)/P×α; and a gain of a B channel may be determined according to a formula: B_gain=1-(6500K-5500K)/P×β.

T is the reference light source color temperature value corresponding to the to-be-processed image; T0 is the reference color temperature; P is a reference color temperature difference, and is a preset value; and α and β are preset constants.

Specifically, P may be adjusted based on different application scenarios and experimental data, and a value may range from 500K to 2000K. α and β are constants obtained through optimization by a large number of experiments. A value of α may range from 0.1 to 0.3, and a value of β may range from 0.2 to 0.4.

When the reference light source color temperature value is greater than 5500K, similar to sunlight in an overcast day or in a shadow, a spectrum shifts towards blue. Therefore, the red channel requires more gain to compensate for this shift, and the blue channel requires less gain. However, when the reference light source color temperature value is less than 5500K, similar to sunlight in the morning or evening, a spectrum shifts towards red. Therefore, the blue channel requires more gain to compensate for this shift, and the red channel requires less gain. Therefore, a gain calculation manner of the red channel and the blue channel may be set based on the foregoing principle.

For example, if the reference light source color temperature value is 6500K, similar to the sunlight in an overcast day or in a shadow, the spectrum shifts towards blue. In this case, the gain of the R channel R_gain=1+(6500K-5500K)/1000K×α; and the gain of the B channel B_gain=1-(6500K-5500K)/1000K×β. 1000K in the foregoing gain calculation formula is a fixed value, and α and β are constant values.

The foregoing gain calculation manner is merely an example, and there may be more calculation manners, which are not described herein one by one.

Operation S140: Perform a color correction on at least the pixel-region of interest in the to-be-processed image (e.g., the input image) based on the white balance gain for the to-be-processed image (e.g., the input image).

Specifically, for at least each pixel of the pixel-region of interest in the to-be-processed image, a color value of a channel corresponding to the pixel is multiplied by the gain of each channel included in the white balance gain for the to-be-processed image, to obtain a color-corrected image.

For example, if the gain of the R channel is R_gain, the gain of the G channel is G_gain, the gain of the B channel is B_gain, and intensity values of the color channels of a pixel are (R1, G1, and B1), intensity values of the color channels of the pixel after color correction is (R2, G2, and B2). R2=R1×R_gain, G2=G1×G_gain, and B2=B1×B_gain.

The pixel-region of interest usually includes information about which a user or an application is most concerned, such as a face, a palm, a specific object, an identifier, or the like, and a color of the face, the palm, or the like is usually yellow or white. A color of light of a light source is usually also yellow, and a color difference is small. Therefore, a determined estimated light source color temperature value is inaccurate if the pixel-region of interest in which the target semantic object is located in the to-be-processed image is used for color temperature value estimation. By using the foregoing method of this application, color temperature value estimation is performed based on the non-pixel-region of interest other than the pixel-region of interest in the to-be-processed image, to determine the estimated light source color temperature value of the to-be-processed image, so that a case in which color temperature value estimation is inaccurate due to a small difference between an actual color of an object presented in the pixel-region of interest and a color of the light source in the environment from which the to-be-processed image comes can be avoided. Therefore, the estimated light source color temperature value can more truly reflect the color temperature of the light source in the environment from which the to-be-processed image comes. Subsequently, the white balance gain for the to-be-processed image is determined with reference to both the estimated light source color temperature value of the to-be-processed image and the historical light source color temperature value of the reference image acquired before the to-be-processed image, to help determine the white balance gain for the to-be-processed image by using the historical light source color temperature value of the reference image, thereby improving accuracy of determining the white balance gain. Finally, color correction is performed on at least the pixel-region of interest in the to-be-processed image based on the white balance gain for the to-be-processed image, so that a color of the pixel-region of interest in a processed image can be more accurate.

In an implementation, the pixel-region of interest is a pixel region reflecting a biological feature. The foregoing method further includes: performing identity recognition based on the color-corrected pixel-region of interest, to obtain an identity recognition result.

Specifically, in all embodiments of the present disclosure, for the color-corrected pixel-region of interest, a texture feature is extracted by using a local binary pattern (LBP) algorithm. The pixel-region of interest is divided into a plurality of small sub-regions, an LBP feature histogram of each sub-region is calculated, and histograms of all the sub-regions are connected to be a feature vector *F*. A plurality of feature templates *Fᵢ*(*i* = 1,2, ···, *n*) of a registered user are stored in a database. A Euclidean distance *Dᵢ* between the feature vector *F* and each feature template *Fᵢ* is calculated. If there is *Dⱼ* less than a preset distance threshold *Dₜₕ*, it is considered that identity recognition succeeds, and an identity recognition result indicating user information corresponding to a feature template *Fⱼ* is obtained. If *Dᵢ* is all greater than or equal to *Dₜₕ*, an identity recognition result indicating an identity verification failure is obtained.

When identity recognition is performed based on the color-corrected pixel-region of interest, a feature that can be configured for identity recognition may be extracted from the color-corrected pixel-region of interest, and similarity calculation is performed on the extracted feature and the plurality of feature templates stored in the database. If there is a feature template whose similarity is greater than a preset threshold, the identity recognition result indicating the user information corresponding to the feature template is obtained. If the similarity is not greater than the preset threshold, the identity recognition result indicating the identity verification failure is obtained.

The foregoing method may be applied to an electronic device on which identity verification needs to be performed, such as an access control device, a payment device, or a safe deposit box. After the identity recognition result is obtained, a corresponding operation may be performed based on a function of the electronic device, for example, access control management is performed based on the identity recognition result, or payment processing is performed based on the identity recognition result. In this case, referring to FIG. 8, the electronic device may include an image acquisition device. The image acquisition device may include at least one of an RGB camera and an infrared camera.

When identity recognition of the user is performed, ambient light may be blocked, resulting in inaccurate image recognition by the electronic device during image acquisition. Therefore, in an implementation of this application, a light source is further disposed in the electronic device, and is configured for providing supplementary light.

A color temperature of the light source may be set from 5000K to 7000K. Further, the color temperature of the light source may be 5500K, 6000K, 6500K, or the like.

In an implementation, the method is applied to a payment device, and the pixel-region of interest is a palm print pixel region or a face region. After operation S140 is performed, the method further includes: performing payment processing based on the identity recognition result.

By using the foregoing method, after the payment device acquires the to-be-processed image, an image obtained after color correction is performed on the pixel-region of interest in the to-be-processed image is more accurate. Therefore, during subsequent payment, a color of the pixel-region of interest is more natural, to avoid payment failure caused by an identity recognition error due to impact of ambient light on image quality. This reduces a possibility of incorrect recognition or recognition failure caused by a lighting condition.

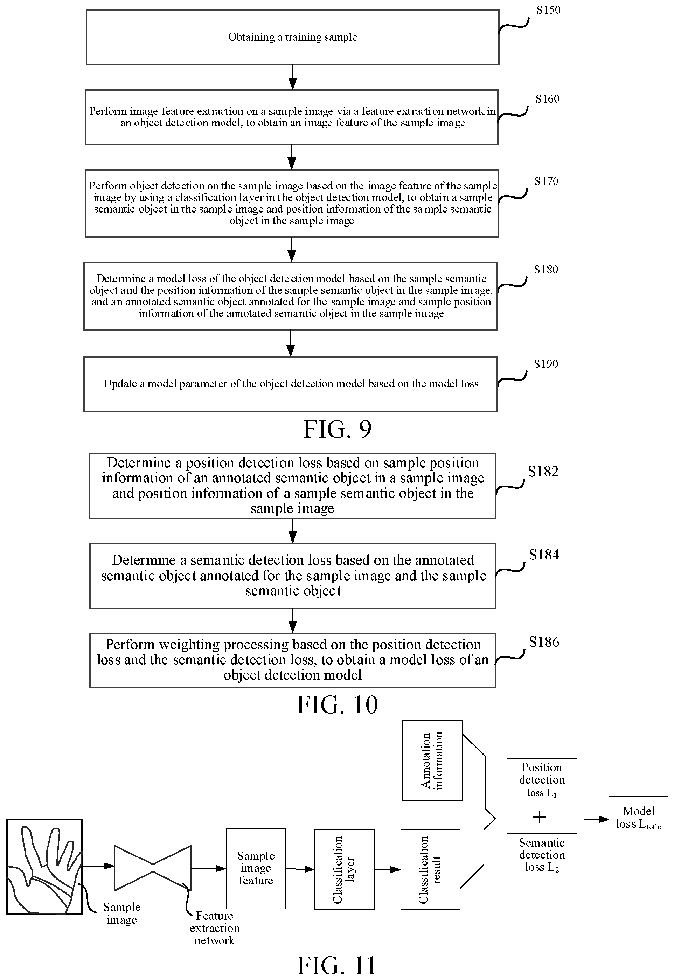

Refer to FIG. 9. In an implementation, the image processing method further includes operation S150 to operation S190. Operation S150 to operation S190 may further form an independent protection subject: an object detection model training method, which may also be referred to as an image processing method and is used for training an object detection model. The object detection model may be applied to the image processing method in the foregoing embodiments, or may be applied to another scenario in which object detection is needed.

Operation S150: Obtain a training sample.

The training sample includes a sample image and label information of the sample image, and the label information indicates an annotated semantic object annotated for the sample image and sample position information of the annotated semantic object in the sample image.

The sample position information of the annotated semantic object in the sample image indicates a detection box of a sample semantic object.

There may be a plurality of manners of obtaining the training sample. For example, a plurality of images may be annotated one by one by a professional, to determine a semantic object in an image and position information of the image.

Alternatively, a large amount of data may be preliminarily annotated through a language model and/or an image recognition model, and the training sample is screened based on an annotation result. Specifically, related text descriptions of a large number of images may be processed through a pre-trained language model (for example, BERT), to extract semantic information in the text, and generate initial semantic labels for the images. In addition, object detection is performed on the image through an image recognition model (for example, Faster R-CNN), to recognize an object type and position information in the image. Semantic label generated by the language model and a detection result of the image recognition module are combined to obtain a preliminary annotation result. A confidence score *C* is calculated for each annotation result. The confidence score comprehensively considers a prediction probability of the language model and detection confidence of the image recognition model. An image whose confidence score *C* is greater than a preset threshold *Cₜₕ* and whose annotation information is complete (including the object type and the position information) is screened to be used as the training sample.

Alternatively, the training sample may be selected from an object open source dataset. The object open source dataset may be a grounded vision narratives (GVN) dataset that is configured for researching vision narratives and understanding multimodal interactions or Microsoft common objects in context (MSCOCO) that is a large-scale image recognition and image-text dataset.

The training sample may include a positive sample and a negative sample. A sample image in the positive sample is an image including a target semantic object, and an annotated semantic object in a sample label of the sample image is the target semantic object. A sample image in the negative sample is an image that does not include the target semantic object, and an annotated semantic object in a sample label of the negative sample is non-target semantic object.

For example, if the target semantic object is a palm, the sample image in the positive sample is an image including a palm, and the sample image in the negative sample is an image that does not include a palm. If the target semantic object is a face, the sample image in the positive sample is an image including a face, and the sample image in the negative sample is an image that does not include a face. If the target semantic object is a vehicle, the positive sample is an image including a vehicle, and the negative sample is an image that does not include a vehicle.

The positive sample and the negative sample are set, so that a feature extraction network can better understand information or semantics in the image, thereby helping improve a determining and decision-making capability of the model. In addition, because of existence of the negative sample, the feature extraction network can better generalize new data that has not been seen. For example, when some noise or abnormal features similar to the negative sample exist subsequently, the model can also effectively recognize and exclude the noise or abnormal features, to extract a key feature more accurately.

For example, if the target semantic object is a palm, operation S150 may be as follows. A plurality of images acquire by an image acquisition device for different objects may be obtained. The acquired objects may include a left palm and a right palm, and may further include a vehicle, a face, a human body, furniture, and the like. A ratio of a number of images including a palm to a number of images that do not include a palm is within a preset ratio range, for example, a range of 0.9 to 1.1, or a number of images including a palm is the same as a number of images that do not include a palm. After the plurality of images is obtained, cleaning processing may be performed on the plurality of images, and remaining images after the cleaning processing are annotated, to obtain the sample image. The image including a palm is the positive sample, and an image that does not include a palm is the negative sample.

In an implementation, the sample image includes at least one of an RGB image and an infrared image.

Operation S160: Perform image feature extraction on the sample image via the feature extraction network in the object detection model, to obtain an image feature of the sample image.

The feature extraction network is a neural network configured for performing feature encoding on a two-dimensional image. An image feature encoder may be constructed through a convolutional neural network, a pooling neural network, a Transformer network, or the like.

In this case, if the feature extraction network is a convolutional neural network, operation S160 may be: Perform convolution and pooling operations on each image block in an image block sequence through a convolutional layer and a pooling layer, to extract the feature of the sample image.

When the feature extraction network is a Transformer network, operation S160 may be as follows. For the image block sequence, feature extraction may be performed on the image block sequence through the convolutional neural network (CNN), and then an extracted feature vector is used as an input of the Transformer network, to further extract a context feature, so as to obtain the feature of the sample image. Alternatively, after pixel values in the image blocks are normalized, feature extraction is performed on the image block sequence by using a multilayer self-attention mechanism and an attention mechanism, to obtain the feature of the sample image.

The foregoing process of feature extraction is merely an example. When a network structure of the feature extraction network is different, a corresponding process of feature extraction is different. This is not specifically limited in all embodiments of the present disclosure.

Operation S170: Perform object detection on the sample image based on the image feature of the sample image by using a classification layer in the object detection model, to obtain the sample semantic object in the sample image and position information of the sample semantic object in the sample image.

For a process of performing object detection on the sample image, reference may be made to specific descriptions of operation S110 in the foregoing embodiments. Details are not described herein again.

Operation S180: Determine a model loss of the object detection model based on the sample semantic object and the position information of the sample semantic object in the sample image, and the annotated semantic object annotated for the sample image and the sample position information of the annotated semantic object in the sample image.

Refer to FIG. 10. In an implementation, operation S180 includes the following operations.

Operation S182: Determine a position detection loss based on sample position information of the annotated semantic object in the sample image and the position information of the sample semantic object in the sample image.

Specifically, loss calculation may be performed based on the sample position information of the annotated semantic object in the sample image and the position information of the sample semantic object in the sample image by using a cross-entropy loss function, an IoU loss function, a weighted cross-entropy loss function, a mean square error loss function, a Manhattan distance loss function, and a cosine similarity loss function, to obtain the position detection loss.

In all embodiments of the present disclosure, for the position detection loss, a cross-entropy loss *L_{ce},* an IoU loss *Lᵢₒᵤ,* a weighted cross-entropy loss *L_{wce},* a mean square error loss *Lₘₛₑ,* a Manhattan distance loss *L_{md},* and a cosine similarity loss *L_{cs}* are separately calculated.

Cross-entropy loss *L_{ce}*: The cross-entropy loss *L_{ce}* is configured for measuring a difference between a classification probability distribution of the sample semantic object and that of the annotated semantic object. A formula is ${L}_{ce} = - {\sum }_{i = 1}^{n} {y}_{i} log \left({p}_{i}\right)$, where *yᵢ* is an annotated true type label (0 or 1), and *pᵢ* is a class probability predicted by the model.

IoU loss *Lᵢₒᵤ* : Intersection over union (IoU) between the detection box of the sample semantic object and a detection box of the annotated semantic object is calculated, and then the loss is calculated by using *Lᵢₒᵤ =* 1 *- IoU.*

Weighted cross-entropy loss *L_{wce}*: Based on the cross-entropy loss, samples of different types are weighted, to deal with a problem of sample imbalance. A formula is ${L}_{wce} = - {\sum }_{i = 1}^{n} {w}_{i} {y}_{i} log \left({p}_{i}\right)$ , where *wᵢ* is a weight coefficient.

Mean square error loss *Lₘₛₑ*: A mean square error between position coordinates of the sample semantic object and position coordinates of the annotated semantic object is calculated. A formula is ${L}_{mse} = \frac{1}{2} {{\sum }_{i = 1}^{n} {\left({x}_{i}^{pred}-{x}_{i}^{true}\right)}^{2} + \left({y}_{i}^{pred}-{y}_{i}^{true}\right)}^{2}$, where ${x}_{i}^{pred}$ and ${y}_{i}^{pred}$ are predicted position coordinates, and ${x}_{i}^{true}$ and ${y}_{i}^{true}$ are true position coordinates.

Manhattan distance loss *L_{md}*: A Manhattan distance between the position coordinates of the sample semantic object and the position coordinates of the annotated semantic object is calculated. A formula is ${L}_{md} = {\sum }_{i = 1}^{n} \left|{x}_{i}^{pred}-{x}_{i}^{true}\right| + \left|{y}_{i}^{pred}-{y}_{i}^{true}\right|$.

Cosine similarity loss *L_{cs}*: A cosine similarity between a feature vector of the sample semantic object and a feature vector of the annotated semantic object is calculated, and then the loss is calculated by using *L_{cs}* = 1 - cos(*v̅_{pred}*, *v̅ₜᵣᵤₑ*).

A final position detection loss *Lₚₒₛ* = *α*₁*L_{ce} + α*₂*Lᵢₒᵤ + α*₃*L_{wce} + α*₄*Lₘₛₑ* + *α*₅*L_{md} + α*₆*L_{cs},* where *α*₁, *α*₂, ···*, α*₆ are weight coefficients determined through an experiment, and are configured for balancing contributions of different loss functions.

Operation S184: Determine a semantic detection loss based on the annotated semantic object annotated for the sample image and the sample semantic object.

Specifically, loss calculation may be performed based on the annotated semantic object annotated for the sample image and the sample semantic object by using the cross-entropy loss function, the IoU loss function, the weighted cross-entropy loss function, the mean square error loss function, the Manhattan distance loss function, and the cosine similarity loss function, to obtain the semantic detection loss.

Further, for the semantic detection loss, a cross-entropy loss *L_{ce}',* an IoU loss *Lᵢₒᵤ*', a weighted cross-entropy loss *L_{wce}*', a mean square error loss *Lₘₛₑ*', a Manhattan distance loss *L_{md}',* and a cosine similarity loss *L_{cs}'* are also separately calculated. A calculation method is similar to that of the corresponding loss function in the position detection loss. A final semantic detection loss *Lₛₑₘ* = *β*₁*L_{ce}*' + *β*₂*Lᵢₒᵤ'* + *β*₃*L_{wce}' + β*₄*Lₘₛₑ'* + *β*₅*L_{md}' + β*₆*L_{cs}',* where *β*₁, *β*₂,···, *β*₆ are weight coefficients determined through an experiment, and are configured for balancing contributions of different loss functions.

Operation S186: Perform weighting processing based on the position detection loss and the semantic detection loss, to obtain the model loss of the object detection model.

Weight coefficients of the position detection loss and the semantic detection loss may be set based on an actual requirement. The weight coefficients of the position detection loss and the semantic detection loss may be the same or may be different.

For example, if the position detection loss is L₁, and the semantic detection loss is L₂, a model loss Lₜₒₜₗₑ may be defined as: Lₜₒₜₗₑ=λ₁×L₁+λ₂×L₂.

λ₁ is the weight coefficient of the position detection loss, λ₂ is the weight coefficient of the semantic detection loss, and optimal values of λ₁ and λ₂ may be determined through an experiment, to balance importance of different tasks in a training process.

Specifically, the optimal values of *λ*₁ and *λ*₂ may be determined by using a grid search method. Grid search is a method for determining weight coefficients of a position detection loss and a semantic detection loss in an object detection model. Value ranges of the weight coefficients are set and divided into a plurality of discrete points to form a parameter grid. The model is trained and evaluated on a validation set for each pair of values in the parameter grid. A pair of values having highest mean average precision (mAP) on the validation set are selected as optimal weight coefficients, to balance importance of different tasks. First, value ranges of *λ*₁ and *λ*₂ are set, for example, *λ*₁ ∈ [0,1], *λ*₂ ∈ [0,1], and *λ*₁ + *λ*₂ = 1. Then, the value ranges are divided into a plurality of discrete points, to form a parameter grid. For each pair of values (*λ*₁, *λ*₂) in the parameter grid, the object detection model is trained by using the same training sample and training setting, and performance of the model is evaluated on a validation set. An evaluation indicator may be mean average precision (mAP). A pair of values (*λ*₁, *λ*₂) having highest mAP on the validation set are selected as optimal weight coefficients. The mean average precision is an indicator for evaluating performance of an object detection model. When the object detection model is trained, the mean average precision of the model is evaluated on the validation set, and a pair of weight coefficients having the highest mAP on the validation set are selected as the optimal weight coefficients, to balance contributions of the position detection loss and the semantic detection loss.

Operation S190: Update a model parameter of the object detection model based on the model loss.

After the model loss is obtained, the model parameter may be adjusted based on the model loss to minimize the model loss. A training end condition may be that an iteration number of the object detection model reaches a preset number, or the model loss is less than a preset loss threshold.

By using the foregoing operations S150 to S190, the object detection model is trained by using the training sample having the annotation information, so that the object detection model can learn correct classification labels and positions of object boxes, thereby ensuring that the object detection model can subsequently accurately recognize target objects in an image and precisely position these objects.

In an implementation, before operation S160 is performed, the method further includes: performing block processing on the sample image, to obtain an image block sequence; and performing image encoding on each image block in the image block sequence, to obtain an image block encoded sequence. Operation S160 may alternatively be: performing feature extraction on the image block encoded sequence via the feature extraction network in the object detection model, to obtain the image feature of the sample image.

In an object detection task, because an object may appear at any position in an image, block processing is performed on the sample image, and feature extraction is performed on the image block encoded sequence via the feature extraction network in the object detection model after each image block are encoded, so that the object detection model can capture local features in more detail. For example, during a pedestrian detection task or a palm detection task executed by the object detection model, even though a pedestrian or a palm occupies only a small part of an image, the object detection model can focus more on these key blocks through block processing, thereby improving detection precision.

Further, because each image block requires fewer computing resources relative to an entire image, the image block can be more easily placed into a graphic processing unit for efficient parallel computing. In addition, because each image block can be independently processed, parallel processing can be implemented in the graphic processing unit or a distributed computing environment, to focus on local feature information of the sample image while reducing a computing load and accelerating a training speed.

For a process of performing block processing on the sample image and a subsequent process of feature extraction, reference may be made to specific descriptions of operation S110 in the foregoing. Details are not described herein again.

FIG. 11 shows a training process by using sample images acquired by an infrared camera or an RGB camera. The sample images have label information. For each sample image, feature extraction is performed on the sample image via a feature extraction network in an object detection model, to obtain an image feature of the sample image. Object detection is performed based on the image feature of the sample image by using a classification layer of the object detection model, to obtain a sample semantic object in the sample image and position information of the sample semantic object in the sample image. Subsequently, a position detection loss L₁ may be determined based on sample position information of an annotated semantic object in the sample image and the position information of the sample semantic object in the sample image. A semantic detection loss L₂ is determined based on the annotated semantic object annotated for the sample image and the sample semantic object. Finally, weighting processing is performed based on the position detection loss and the semantic detection loss, to obtain a model loss Lₜₒₜₗₑ of the object detection model. Subsequently, a model parameter of the object detection model may be adjusted based on the model loss.

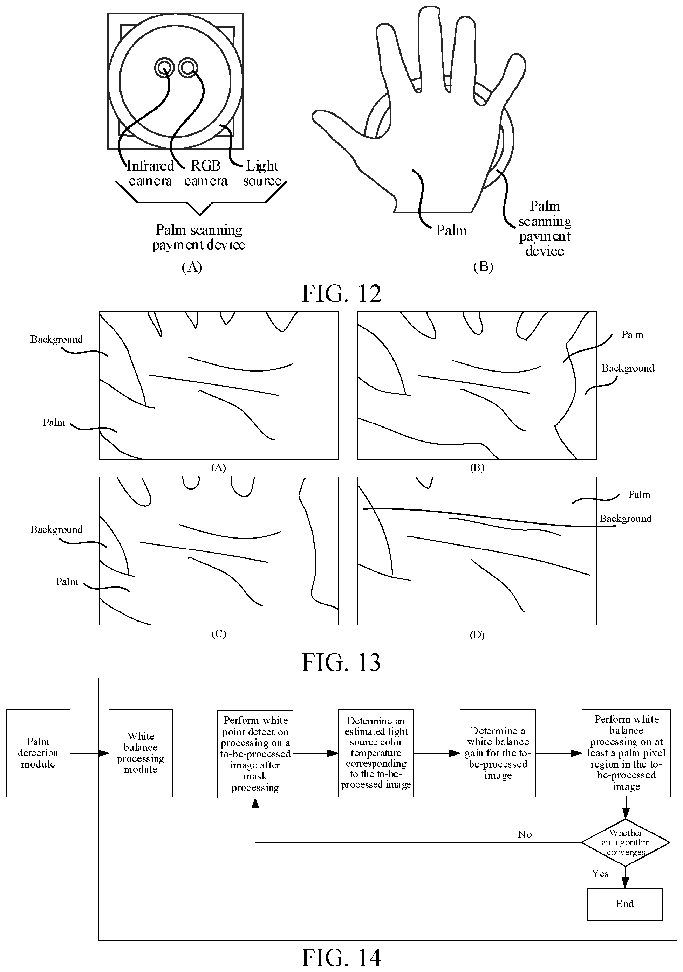

An example in which the image processing method of this application is applied to a palm scanning payment device is used for description. Referring to FIG. 12A, the palm scanning payment device includes a processor (not shown in the figure), an image acquisition device (for example, an RGB camera and an infrared camera), and a light source. The image acquisition device is connected to the processor, and the image acquisition device performs image acquisition, to obtain a to-be-processed image. The light source may be configured to emit light of a specified color temperature (for example, 6500K). As shown in FIG. 12B, the light source may be a light guide ring, configured to instruct a user to place a palm over a position of the light guide ring during palm scanning payment. An optical axis of the image acquisition device is located in the light guide ring, and there may be one or more image acquisition devices. When there are a plurality of image acquisition devices, the plurality of image acquisition devices may include an RGB image acquisition device and an infrared image acquisition device.

The image acquisition device in the palm scanning payment device may perform image acquisition, to obtain the to-be-processed image, and transmit the obtained to-be-processed image to the processor. For a plurality of palm images acquired by the image acquisition device in the palm scanning device, because a lighting condition in an actual environment is very complex, and includes various light sources such as natural light, indoor lamp light, and light of the light guide ring of the palm scanning payment device, and color temperatures, intensities, and directions of these light sources may be all different, the acquired palm images have different degrees of casts.

If the image processing method of this application is not performed before payment processing is performed, after color correction is performed on a part of an image based on a determined white balance gain, the image still has a severe color cast. FIG. 13 shows a palm image that still has a color cast after color correction is performed. Apparently, if identity verification is directly performed on the palm image shown in FIG. 13, an image feature may not be accurately extracted. Finally, a palm cannot be correctly recognized, and further payment processing cannot be completed. In FIG. 13A, a palm is roughly dark cyan, and a point is sampled, represented by a hexadecimal color code 3d6656. A background is roughly light gray, and a point is sampled, represented by a hexadecimal color code 474948. In FIG. 13B, a palm is roughly dark blue-purple, and a point in the middle is sampled, represented by a hexadecimal color code 2c1f4d. A background is roughly purple-red, and a point is sampled, represented by a hexadecimal color code A62b85. In FIG. 13C, a palm is roughly dark indigo, and a point is sampled, represented by a hexadecimal color code 32316a. A background is roughly purple-red, and a point is sampled, represented by a hexadecimal color code b12182. In FIG. 13D, a palm is roughly dark green, and a point is sampled, represented by a hexadecimal color code 457f67. A background is roughly dark gray, and a point is sampled, represented by a hexadecimal color code 4f5354.

Based on this, referring to FIG. 14, the processor in this application may specifically include a palm detection module, a color correction module, and a payment processing module (not shown in the figure). The modules may perform the following processing processes.

When receiving a to-be-processed image, the processor may invoke the palm detection module to perform the following operations.

Palm detection module: The palm detection module performs palm detection on an image acquired by a palm scanning payment device in real time. If no pixel-region of interest (that is, a palm pixel region) exists in the acquired image, the currently acquired image is used as a reference image, and color temperature value estimation is performed on the reference image, and a light source color temperature of the reference image is determined as a historical light source color temperature value of the reference image.

The palm detection module continuously performs palm detection on subsequently acquired images. If it is determined that the palm pixel region exists in an image, color temperature value estimation is performed based on a non-pixel-region of interest in the image, to determine an estimated light source color temperature value corresponding to the image.

In the process in which the palm detection module performs palm detection, processing is performed according to the following process.

Block processing is performed on an image acquired in real time, to obtain an image block sequence of the image acquired in real time. Then, the image block sequence of the image acquired in real time is encoded, to obtain an image block encoded sequence of the image acquired in real time. Subsequently, palm detection is performed on the image block encoded sequence of the image acquired in real time via a feature extraction network in an object detection model (for example, a palm detection model). If it is determined that the palm pixel region exists in the image acquired in real time, the image may be used as the to-be-processed image, and the color correction module may be invoked to perform the following operations.

A white point detection operation: Mask processing is performed on the palm pixel region in the to-be-processed image, to obtain a to-be-processed image after mask processing. White point detection processing is performed on the to-be-processed image after mask processing, to obtain a reference white point of a non-palm pixel region.

A light source color temperature value estimation operation: A color value of the reference white point is converted from an RGB space into a CIE XYZ color space, and then into a CIE xy color space, to obtain chrominance coordinates corresponding to the color value of the reference white point. The chrominance coordinates corresponding to the color value of the reference white point indicate a corresponding position of the reference white point in a CIE xy chrominance graph. A reference point closest to the chrominance coordinates of the reference white point is determined on a Planck's curve; and the estimated light source color temperature value of the to-be-processed image is determined based on a color temperature corresponding to the reference point. Median filtering is performed on the estimated light source color temperature value of the to-be-processed image and the historical light source color temperature value of the reference image, to obtain a reference light source color temperature value of the to-be-processed image. The reference image and the to-be-processed image are acquired by an image acquisition device in the palm scanning payment device. The reference image includes at least one of K frames of images acquired by the image acquisition device before the to-be-processed image, and K is a positive integer.

A gain calculation operation: A white balance gain for the to-be-processed image is determined based on the reference light source color temperature value of the to-be-processed image.

A color correction operation: Color correction is performed on at least the palm pixel region in the to-be-processed image based on the white balance gain for the to-be-processed image, to obtain a processed palm pixel region.

After color correction is performed on the palm region, identity recognition may be further performed based on the processed palm pixel region by invoking the payment processing module, to obtain an identity recognition result including user information, and payment processing is performed based on the identity recognition result. For example, a corresponding payment account is found based on the user information, and payment processing is performed based on the payment account.

After the color correction operation is performed, the color correction module may further perform the following operation. Whether an algorithm involved in the color correction module converges is determined based on the processed palm pixel region. If the algorithm does not converge, at least one of the algorithm and the parameter involved in the foregoing operations may be adjusted, and the foregoing operation is repeated until the algorithm involved in the color correction module converges, to obtain a final processed palm pixel region. A method for determining whether the algorithm involved in the color correction module converges may be as follows. An average color temperature of the processed palm pixel region is calculated and compared with a specified color temperature (for example, 6500K). If a difference between the average color temperature and the specified color temperature is less than a preset threshold, it indicates that the algorithm involved in the color correction module has converged.

Through the foregoing process, a historical light source color temperature value corresponding to an image (that is, a reference image) acquired when there is no palm is used as a reference, and the historical light source color temperature value of the reference image can accurately reflect a color temperature of a light source in an environment. An image acquired when there is a palm is used as a to-be-processed image, and color temperature value estimation is performed based on a non-palm pixel region in the to-be-processed image, to determine an estimated light source color temperature value of the to-be-processed image, thereby avoiding inaccurate color temperature value estimation caused by a small difference between an actual color of the palm presented in the palm pixel region and a color of a light source in an environment from which the to-be-processed image comes. Therefore, the estimated light source color temperature value of the to-be-processed image can also truly reflect a color temperature of the light source in the environment from which the to-be-processed image comes.

A white balance gain for the palm in the to-be-processed image is determined by comprehensively using the historical light source color temperature value of the reference image and the color temperature estimated from the image acquired when there is the palm, so that the white balance gain for the palm in the to-be-processed image can be determined with help of the historical light source color temperature value of the reference image, thereby improving accuracy of determining the white balance gain. Finally, color correction is performed on the palm pixel region based on the white balance gain for the to-be-processed image, so that a color of a processed palm pixel region can be restored to be close to a true color of the palm pixel region, thereby eliminating a color cast caused by an ambient color temperature.

Although all the operations in the flowcharts of the embodiments are displayed sequentially as indicated by the arrows, the operations are not necessarily executed sequentially as indicated by the arrows. Unless clearly specified in this specification, there is no strict sequence limitation on the execution of the operations, and the operations may be performed in another sequence. In addition, at least some operations in the flowcharts involved in the foregoing embodiments may include a plurality of operations or a plurality of stages, and the operations or stages are not necessarily performed at the same moment, and may be performed at different moments. The operations or stages are not necessarily performed in sequence, and may be performed in turns or alternately with other operations, or at least a part of operations or stages in the other operations.

Referring to FIG. 1 again, another embodiment of this application provides a color correction apparatus 155, including a region determining module 1551, a color temperature value estimation module 1552, a gain determining module 1553, and a color correction module 1554. The region determining module 1551 is configured to perform object detection on a to-be-processed image, to determine a pixel-region of interest in the to-be-processed image; the color temperature value estimation module 1552 is configured to perform color temperature value estimation based on a non-pixel-region of interest other than the pixel-region of interest in the to-be-processed image, to determine an estimated light source color temperature value of the to-be-processed image; the gain determining module 1553 is configured to determine a white balance gain for the to-be-processed image based on the estimated light source color temperature value of the to-be-processed image and a historical light source color temperature value of a reference image, the reference image and the to-be-processed image being acquired by a same image acquisition device; the reference image including at least one of K frames of images acquired by the image acquisition device before the to-be-processed image; and K being a positive integer; and the color correction module 1554 is configured to perform color correction on at least the pixel-region of interest in the to-be-processed image based on the white balance gain for the to-be-processed image.

In an implementation, the gain determining module 1553 includes a color temperature obtaining submodule and a gain determining submodule. The color temperature obtaining submodule is configured to perform median filtering on the estimated light source color temperature value of the to-be-processed image and the historical light source color temperature value of the reference image, to obtain a reference light source color temperature value of the to-be-processed image. The gain determining submodule is configured to determine the white balance gain for the to-be-processed image based on the reference light source color temperature value of the to-be-processed image.

In an implementation, the pixel-region of interest is a pixel region reflecting a biological feature. The color correction apparatus 155 further includes an identity recognition module, and the color correction module is further configured to perform color correction on at least the pixel-region of interest in the to-be-processed image based on the white balance gain for the to-be-processed image, to obtain a color-corrected pixel-region of interest. The identity recognition module is configured to perform identity recognition based on the color-corrected pixel-region of interest, to obtain an identity recognition result.

In an implementation, an image processing method is applied to a payment device, and the pixel-region of interest is a palm print pixel region or a face region. The color correction apparatus 155 further includes a payment processing module, configured to perform payment processing based on the identity recognition result.

In an implementation, the color temperature value estimation module 1552 includes a white point detection submodule and a color temperature value estimation submodule. The white point detection submodule is configured to perform white point detection on the non-pixel-region of interest, to obtain a reference white point in the non-pixel-region of interest. The color temperature value estimation submodule is configured to determine the estimated light source color temperature value of the to-be-processed image based on a color value of the reference white point.

In an implementation, the color temperature value estimation submodule is further configured to convert the color value of the reference white point into a target chrominance space, to obtain chrominance coordinates corresponding to the color value of the reference white point; determine, on a Planck's curve, a reference point closest to the chrominance coordinates of the reference white point; and determine the estimated light source color temperature value of the to-be-processed image based on a color temperature corresponding to the reference point.

In an implementation, the region determining module 1551 includes a detection submodule and a region determining submodule. The detection submodule is configured to perform object detection on the to-be-processed image by using an object detection model, to obtain a detection result, the detection result including a semantic object recognized from the to-be-processed image and position information of the semantic object in the to-be-processed image. The region determining submodule is configured to: when determining, based on the detection result, that the to-be-processed image includes the target semantic object, determine a pixel region in which a target semantic object is located in the to-be-processed image as the pixel-region of interest based on position information of the target semantic object in the to-be-processed image.

In an implementation, the color correction apparatus 155 further includes a sample obtaining module, a feature extraction module, a detection module, a loss determining module, and a model update module. The sample obtaining module is configured to obtain a training sample, the training sample including a sample image and label information of the sample image, and the label information indicating an annotated semantic object annotated for the sample image and sample position information of the annotated semantic object in the sample image. The feature extraction module is configured to perform image feature extraction on the sample image via a feature extraction network in the object detection model, to obtain an image feature of the sample image. The detection module is configured to perform object detection on the sample image by using a classification layer in the object detection model, to obtain a sample semantic object in the sample image and position information of the sample semantic object in the sample image. The loss determining module is configured to determine a model loss of the object detection model based on the sample semantic object and the position information of the sample semantic object in the sample image, and the annotated semantic object annotated for the sample image and the sample position information of the annotated semantic object in the sample image. The model update module is configured to update a model parameter of the object detection model based on the model loss.

In an implementation, the loss determining module includes a position detection loss determining submodule, a semantic loss determining submodule, and a model loss determining submodule. The position detection loss determining submodule is configured to determine a position detection loss based on the sample position information of the annotated semantic object in the sample image and the position information of the sample semantic object in the sample image. The semantic loss determining submodule is configured to determine a semantic detection loss based on the annotated semantic object annotated for the sample image and the sample semantic object. The model loss determining submodule is configured to perform weighting processing based on the position detection loss and the semantic detection loss, to obtain the model loss of the object detection model.

In an implementation, the color correction apparatus 155 further includes an image block module and an image encoding module. The image block module is configured to perform block processing on the sample image, to obtain an image block sequence. The image encoding module is configured to perform image encoding on each image block in the image block sequence, to obtain an image block encoded sequence. The feature extraction module is further configured to perform feature extraction on the image block encoded sequence via the feature extraction network in the object detection model, to obtain the image feature of the sample image.

In an implementation, the sample image includes at least one of an RGB image and an infrared image.

The sample obtaining module, the feature extraction module, the detection module, the loss determining module, and the model update module, as well as the image block module and the image encoding module in all embodiments of the present disclosure, may form an independent protection subject: an object detection model training apparatus. The object detection model training apparatus may also be referred to as an image processing apparatus, configured to train the object detection model. The object detection model may be applied to the image processing method or image processing apparatus in the foregoing embodiments, or may be applied to another scenario in which object detection is needed.

All the modules in the foregoing image processing apparatus may be partially or completely implemented through software, hardware, or any combination thereof. The foregoing modules may be built in or independent of a processor of a computer device in a form of hardware, or may be stored in a memory of the computer device in a form of software, for the processor to invoke to perform operations corresponding to the foregoing modules. The apparatus embodiments and the foregoing method embodiments in this application mutually correspond. For specific principles in the apparatus embodiments, reference may be made to content in the foregoing method embodiments. Details are not described herein again.

An embodiment of this application provides a computer program product or a computer program, including executable instructions, the executable instructions being stored in a computer-readable storage medium. A processor of an electronic device reads the executable instructions from the computer-readable storage medium, and executes the executable instructions, to cause the electronic device to perform the foregoing methods in all embodiments of the present disclosure.

An embodiment of this application provides a computer-readable storage medium having computer-readable instructions stored therein, the computer-readable storage medium having executable instructions stored therein, and the computer-readable instructions, when executed by a processor, causing the processor to perform the foregoing methods provided in all embodiments of the present disclosure.

In all embodiments of the present disclosure, the computer-readable storage medium may be a memory such as a ferroelectric random access memory (FRAM), a random access memory (ROM), a programmable random access memory (PROM), an electrically programmable random access memory (EPROM), an electrically erasable programmable random access memory (EEPROM), a flash memory, a magnetic surface memory, an optical disk, or a compact disk random access memory (CD-ROM), or may be any device including one of or any combination of the foregoing memories.

In all embodiments of the present disclosure, the computer-readable instructions may be written in any form of programming language (including a compiled or interpreted language, or a declarative or procedural language) in a form of a program, software, a software module, a script, or code, and may be deployed in any form, including being deployed as an independent program or as a module, a component, a subroutine, or another unit suitable for use in a computing environment.

For example, the computer-readable instructions may, but do not necessarily correspond to a file in a file system, and may be stored in a part of a file that saves another program or data, for example, stored in one or more scripts in a hypertext markup language (HTML) file, stored in a single file dedicated to a program in discussion, or stored in a plurality of collaborative files (for example, files that store one or more modules, subprograms, or code parts).

For example, the computer-readable instructions may be deployed to be executed on a computing device, or deployed to be executed on a plurality of computing devices at the same position, or deployed to be executed on a plurality of computing devices that are distributed in a plurality of positions and interconnected through a communication network.

In conclusion, this application provides an image processing method and apparatus, a device, a computer-readable storage medium, and a computer program product. An electronic device performs object detection on a to-be-processed image, to determine a pixel-region of interest therein. Because objects in which a user is interested are different in different image scenarios, accurately determining the pixel-region of interest is a basis for subsequent targeted processing. Next, color temperature value estimation is performed based on a non-pixel-region of interest, to obtain an estimated light source color temperature value. Because of a small difference between a color of the pixel-region of interest and a color of a light source, if a color temperature is estimated by using the pixel-region of interest, an estimation result may be interfered with by a color of an object of interest, causing inaccuracy. However, by using the non-pixel-region of interest, interference can be avoided, so that light source color temperature value estimation more truly reflects a color temperature condition of an actual light source. Then, a white balance gain is determined with reference to a historical light source color temperature value of a reference image. The historical light source color temperature value of the reference image may provide additional reference information for color temperature estimation of a current to-be-processed image, to help correct an estimation error that may exist, thereby improving accuracy of determining the white balance gain. Finally, color correction is performed on at least the pixel-region of interest based on the gain. In this way, the color of the pixel-region of interest in the processed image is more accurate, to meet a requirement of the user for color accuracy of the object of interest, and improve visual quality and availability of the image.

Further, the electronic device performs median filtering on the estimated light source color temperature value of the to-be-processed image and the historical light source color temperature value of the reference image, to obtain a reference light source color temperature value, and then determines the white balance gain based on the reference light source color temperature value. Median filtering is a nonlinear filtering technology, and can effectively suppress an impact of an abnormal value. In an actual image acquisition process, due to complexity of an environment and instability of a sensor, a single estimated color temperature value may be abnormal. If the white balance gain is determined by directly using such an abnormal value, subsequent white balance adjustment greatly fluctuates, causing a poor image color correction effect. Median filtering smooths a change in a color temperature by processing a plurality of color temperature values, so that a finally obtained reference light source color temperature value is more stable and dependable, thereby further improving stability and accuracy of determining the white balance gain, and making the color correction effect more natural and uniform.

When the pixel-region of interest is a pixel region reflecting a biological feature, the electronic device performs identity recognition based on the color-corrected pixel-region of interest, to obtain an identity recognition result. A pixel-region of interest with an accurate color is crucial to extraction of the biological feature. In an identity recognition process, accuracy of the biological feature directly affects the recognition result. If the image suffers a color cast, the extracted biological feature may deviate. Consequently, accuracy and reliability of identity recognition are reduced. However, according to this method, by means of accurate color correction, the color of the pixel-region of interest is restored to be close to a real state, so that the extracted biological feature can be more accurate, thereby improving accuracy and reliability of identity recognition, providing more powerful support for scenarios in which identity verification is needed, for example, an access control system and a payment system, and ensuring security and normal operation of the system.

When the electronic device is a payment device, and the pixel-region of interest is a palm print pixel region or a face region, after obtaining the identity recognition result, the electronic device performs payment processing based on the result. In a payment scenario, accurate identity recognition is a key to ensuring payment security and a normal operation. If image quality is affected by illumination, causing an identity recognition error, a payment process may fail, causing inconvenience and economic losses to the user. According to this method, by means of accurate color correction and identity recognition, a probability of mistaken recognition or recognition failure caused by a lighting condition is reduced, to improve a success rate and security of payment processing, and ensure fund security and payment experience of the user.

Further, the electronic device performs white point detection processing on the non-pixel-region of interest to obtain a reference white point, and then determines the estimated light source color temperature value of the to-be-processed image based on a color value of the reference white point. In an image, a white point usually has high brightness and uniform color distribution, and a color value thereof can better reflect a characteristic of a light source. Through white point detection processing, suitable reference white points can be screened from the non-pixel-region of interest, and color values of the reference white points can more represent a color of an actual light source. A color temperature is estimated based on the color values of the reference white points, to reflect a color temperature characteristic of the light source more accurately, and provide a more reliable basis for subsequently determining the white balance gain, thereby improving accuracy of color correction.

Further, the electronic device converts the color value of the reference white point into a target chrominance space, to obtain chrominance coordinates, determines, on a Planck's curve, a reference point closest to the chrominance coordinates, and determines the estimated light source color temperature value of the to-be-processed image based on a color temperature corresponding to the reference point. The Planck's curve describes a relationship between a color of blackbody radiation and a temperature, and color temperature characteristics of many common light sources can be approximately described by using blackbody radiation. After the color value of the reference white point is converted into the target chrominance space, the reference point corresponding to the reference white point can be more accurately found on the Planck's curve, and the color temperature corresponding to the reference point can more accurately represent the color temperature of the actual light source. In this manner, the color temperature of the light source can be estimated more precisely, to improve accuracy of determining the white balance gain, thereby making the color correction effect better, and making color representation of the image in different light sources more natural and accurate.

Further, the electronic device performs object detection on the to-be-processed image by using an object detection model to obtain a detection result. If the detection result indicates that the to-be-processed image includes a target semantic object, the pixel-region of interest is determined based on position information of the target semantic object. After the object detection model is trained, the object detection model can learn a feature and a mode of the target semantic object, to accurately recognize the target semantic object in the image and a position of the target semantic object. Accurately determining the pixel-region of interest is a basis for subsequent targeted processing, and provides an accurate region range for subsequent color temperature estimation and color correction, to avoid processing for an unnecessary region, thereby improving accuracy and efficiency of an entire image processing procedure, and reducing waste of computing resources.

Further, the electronic device obtains a training sample including a sample image and label information, performs feature extraction on the sample image via a feature extraction network in the object detection model, performs object detection by using a classification layer to obtain a sample semantic object and position information, determines a model loss based on the information and annotation information, and finally updates a parameter of the object detection model based on the model loss. By using the training sample with the annotation information, the object detection model can learn correct classification labels and positions of object boxes. In a training process, the model constantly adjusts the parameter to minimize the model loss, so that the model can better adapt to different image scenarios and target objects. In actual application, the object detection model obtained through training can accurately recognize target objects in an image and precisely position these objects, to improve accuracy and reliability of object detection, and provide a more accurate basis for subsequent image processing.

Further, the electronic device determines a position detection loss based on position information of an annotated semantic object and the sample semantic object, determines a semantic detection loss based on the annotated semantic object and the sample semantic object, and then performs weighting processing on the two losses to obtain the model loss of the object detection model. The position detection loss reflects accuracy of the model in positioning the target object, and the semantic detection loss reflects accuracy of the model in recognizing a type of the target object. These two losses are taken into consideration comprehensively, and contributions of the two losses are balanced through weighting processing, so that the object detection model learns sample information more comprehensively in the training process, paying attention to both a position and semantic information of the target object. In this way, performance and accuracy of the model can be improved, so that the model can more accurately recognize and position the target object in actual application.

Before performing image feature extraction on the sample image via the feature extraction network in the object detection model, the electronic device performs block processing on the sample image to obtain an image block sequence, encodes each image block to obtain an image block encoded sequence, and then performs feature extraction on the image block encoded sequence via the feature extraction network. Block processing may decompose the large sample image into a plurality of small image blocks. Resolution of each image block is low, and calculation complexity is correspondingly reduced. In addition, encoding of the image block may enable the feature extraction network to better understand and use information, including position information and a local feature, of the image block. In this way, the object detection model can capture the local feature in more detail, and each image block needs a few computing resources, so that parallel processing can be performed in a graphic processing unit or a distributed computing environment, thereby reducing a computing load and accelerating a training speed. In addition, local feature information of the sample image is focused on, so that precision of object detection is improved, to enable the model to recognize and position the target object more accurately.

When the sample image includes at least one of an RGB image and an infrared image, the electronic device may train the object detection model by using different types of sample images. The RGB image includes abundant color information, and can reflect an appearance feature of the target object. The infrared image can provide thermal radiation information of the target object, and has a better detection effect for some target objects having special manifestation in an infrared band. Training data of the model is enriched, so that the model can learn a wider range of features, to improve generalization capability and adaptability of the model, and object detection can be accurately performed when facing different types of to-be-processed images, thereby expanding an application range of the model.

The electronic device performs an object detection model training method, to obtain the training sample, performs feature extraction on the sample image via the feature extraction network in the object detection model, performs object detection by using the classification layer, determines the model loss based on the detection result and the annotation information, and finally updates the model parameter. Through such a training process, the object detection model can continuously learn and optimize the parameter, to accurately recognize and position the target object. In actual application, accurate object detection is important in many fields, such as security monitoring and autonomous driving, and can improve security and reliability of a system.

Further, the electronic device determines the position detection loss based on the position information of the annotated semantic object and the sample semantic object, determines the semantic detection loss based on the annotated semantic object and the sample semantic object, and performs weighting processing on the two losses to obtain the model loss of the object detection model. The position detection loss and the semantic detection loss reflect performance of the model from different perspectives, and the contributions of the two losses can be balanced through weighting processing, so that the model can learn the sample information more comprehensively in the training process. In this way, performance and accuracy of the model can be improved, so that the model can more accurately recognize and position the target object in actual application, and provide a more reliable basis for subsequent image processing and analysis.

Before performing image feature extraction on the sample image via the feature extraction network in the object detection model, the electronic device performs block processing on the sample image to obtain the image block sequence, encodes each image block to obtain the image block encoded sequence, and then performs feature extraction on the image block encoded sequence via the feature extraction network. Block processing and encoding may decompose the sample image into a plurality of small units that are easy to process, and each unit includes local feature information. The feature extraction network may process these units in parallel, to improve processing efficiency. In addition, in this manner, the model can capture the local feature in more detail, to improve precision of object detection, so that the model can accurately recognize and position the target object when facing a complex image scenario.

Before operation S120 is performed, mask processing is performed on each pixel in the pixel-region of interest in the to-be-processed image, and a color value of the pixel is set to a specified color value (for example, black). Because of the small difference between the color of the pixel-region of interest and the color of the light source, if mask processing is not performed, color information of the pixel-region of interest may interfere with color temperature estimation. After mask processing is performed, the region is not used for color temperature estimation subsequently, to avoid interference of the pixel-region of interest to color temperature estimation, so that light source color temperature value estimation more accurately reflects the color temperature of the actual light source, thereby providing a more reliable basis for subsequently determining the white balance gain, so as to improving the color correction effect.

When the training sample is obtained, a large amount of data is preliminarily annotated through a language model and/or an image recognition model, and the training sample is screened based on an annotation result. Efficiency of annotating images one by one by a professional is low. However, in this manner, by using an advantage of the language model and image recognition model, a large number of images can be preliminarily annotated quickly, to improve annotation efficiency. In addition, a training sample of high quality is screened by calculating a confidence score, to ensure quality of the training sample, so that the object detection model can learn a more accurate feature and mode in the training process, thereby improving performance and accuracy of the model.

In a palm scanning payment device, a light source is configured for providing supplementary light, and a color temperature of the light source is set from 5000K to 7000K (for example, 5500K, 6000K, or 6500K). When the user performs palm scanning payment, ambient light may be blocked, causing poor quality of an acquired image. A light source of a suitable color temperature provides supplementary light, to provide a stable and uniform lighting condition, so that an acquired image is clearer and has a more accurate color. In this way, during color correction and identity recognition, accuracy of image feature extraction can be improved, thereby improving a success rate of identity recognition and security of payment processing, and ensuring payment experience of the user.

During color correction, a color correction module determines whether an algorithm converges. If the algorithm does not converge, the algorithm and the parameter are adjusted and the foregoing operation is repeated until the algorithm converges. In an actual color correction process, due to complexity of image data and a limitation of the algorithm, an ideal correction effect may not be achieved at one time. By determining whether the algorithm converges and performing adjustment, a color correction result can be continuously optimized, so that a color of a processed image is more accurate and natural, thereby improving image quality and availability.

Technical features of the foregoing embodiments may be combined in different manners to form other embodiments. For concise description, not all possible combinations of the technical features in the embodiment are described. However, provided that combinations of the technical features do not conflict with each other, the combinations of the technical features are considered as falling within the scope recorded in this specification.

The foregoing embodiments describe merely several implementations of this application and the descriptions are specific and detailed, but they are not to be construed as a limitation on the patent scope of the disclosure. A person of ordinary skill in the art may make various changes and improvements without departing from the ideas of the present disclosure, which shall all fall within the protection scope of the present disclosure. Therefore, the protection scope of this application is subject to the claims.

## Claims

1. An image processing method, executable by an electronic device, the method comprising:
performing an object detection on an input image, to determine a pixel-region of interest in the input image;
performing a color temperature value estimation based on a non-pixel-region of interest other than the pixel-region of interest in the input image, to determine an estimated light source color temperature value of the input image;
determining a white balance gain for the input image based on the estimated light source color temperature value of the input image and a historical light source color temperature value of a reference image, the reference image and the input image being acquired by a same image acquisition device; and the reference image comprising at least one of K frames of images acquired by the image acquisition device before acquiring the input image, K being a positive integer; and
performing a color correction on at least the pixel-region of interest in the input image based on the white balance gain for the input image.

2. The method according to claim 1, wherein the determining the white balance gain for the input image based on the estimated light source color temperature value of the input image and the historical light source color temperature value of the reference image comprises:
performing a median filtering on the estimated light source color temperature value of the input image and the historical light source color temperature value of the reference image, to obtain a reference light source color temperature value of the input image; and
determining the white balance gain for the input image based on the reference light source color temperature value of the input image.

3. The method according to claim 1 or 2, wherein the pixel-region of interest is a pixel region reflecting a biometric feature; and the method further comprises:
performing an identity recognition based on the color-corrected pixel-region of interest, to obtain an identity recognition result of the biometric feature.

4. The method according to claim 3, wherein the electronic device is a payment device, and the pixel-region of interest is a palm print pixel region or a face region; and after the performing identity recognition based on the color-corrected pixel-region of interest, to obtain an identity recognition result of the biometric feature, the method further comprises:
performing a payment processing based on the identity recognition result of the biometric feature.

5. The method according to any one of claims 1 to 4, wherein the performing the color temperature value estimation based on the non-pixel-region of interest other than the pixel-region of interest in the input image, to determine the estimated light source color temperature value of the input image comprises:
performing a white point detection on the non-pixel-region of interest, to obtain a reference white point in the non-pixel-region of interest; and
determining the estimated light source color temperature value of the input image based on a color value of the reference white point.

6. The method according to of claim 5, wherein the determining the estimated light source color temperature value of the input image based on the color value of the reference white point comprises:
converting the color value of the reference white point into a target chrominance space, to obtain chrominance coordinates corresponding to the color value of the reference white point;
determining, on a Planck's curve, a reference point closest to the chrominance coordinates of the reference white point; and
determining the estimated light source color temperature value of the input image based on a color temperature corresponding to the reference point.

7. The method according to any one of claims 1 to 6, wherein the performing the object detection on the input image, to determine the pixel-region of interest in the input image comprises:
performing the object detection on the input image by using an object detection model, to obtain a detection result, the detection result comprising a semantic object recognized from the input image and position information of the semantic object in the input image; and
when the detection result indicates that the input image comprises a target semantic object, determining a pixel region in which the target semantic object is located in the input image as the pixel-region of interest based on position information of the target semantic object in the input image.

8. The method according to claim 7, wherein the object detection model is obtained through training in the following manner:
obtaining a training sample, the training sample comprising a sample image and label information of the sample image, and the label information indicating an annotated semantic object annotated for the sample image and sample position information of the annotated semantic object in the sample image;
performing image feature extraction on the sample image via a feature extraction network in the object detection model, to obtain an image feature of the sample image;
performing object detection on the sample image by using a classification layer in the object detection model, to obtain a sample semantic object in the sample image and position information of the sample semantic object in the sample image;
determining a model loss of the object detection model based on the sample semantic object and the position information of the sample semantic object in the sample image, and the annotated semantic object annotated for the sample image and the sample position information of the annotated semantic object in the sample image; and
updating a model parameter of the object detection model based on the model loss.

9. The method according to claim 8, wherein the determining a model loss of the object detection model based on the sample semantic object and the position information of the sample semantic object in the sample image, and the annotated semantic object annotated for the sample image and the sample position information of the annotated semantic object in the sample image comprises:
determining a position detection loss based on the sample position information of the annotated semantic object in the sample image and the position information of the sample semantic object in the sample image;
determining a semantic detection loss based on the annotated semantic object annotated for the sample image and the sample semantic object; and
performing weighting processing based on the position detection loss and the semantic detection loss, to obtain the model loss of the object detection model.

10. The method according to claim 8 or 9, wherein before the performing image feature extraction on the sample image via a feature extraction network in the object detection model, to obtain an image feature of the sample image, the method further comprises:
performing block processing on the sample image, to obtain an image block sequence; and
performing image encoding on each image block in the image block sequence, to obtain an image block encoded sequence; and
the performing image feature extraction on the sample image via a feature extraction network in the object detection model, to obtain an image feature of the sample image comprises:
performing feature extraction on the image block encoded sequence via the feature extraction network in the object detection model, to obtain the image feature of the sample image.

11. The method according to any one of claims 8 to 10, wherein the sample image comprises at least one of an RGB image and an infrared image.

12. An image processing apparatus, comprising:
a region determining module, configured to perform an object detection on an input image, to determine a pixel-region of interest in the input image;
a color temperature value estimation module, configured to perform a color temperature value estimation based on a non-pixel-region of interest other than the pixel-region of interest in the input image, to determine an estimated light source color temperature value of the input image;
a gain determining module, configured to determine a white balance gain for the input image based on the estimated light source color temperature value of the input image and a historical light source color temperature value of a reference image, the reference image and the input image being acquired by a same image acquisition device; and the reference image comprising at least one of K frames of images acquired by the image acquisition device before acquiring the input image, K being a positive integer; and
a color correction module, configured to perform a color correction on at least the pixel-region of interest in the input image based on the white balance gain for the input image.

13. An electronic device, comprising:
a processor; and
a memory, having computer-readable instructions stored therein, the computer-readable instructions, when executed by the processor, implementing the method according to any one of claims 1 to 11.

14. A non-transitory computer-readable storage medium, having computer-readable instructions stored therein, the computer-readable instructions, when executed by a processor, implementing the method according to any one of claims 1 to 11.

15. A computer program product, comprising computer-readable instructions, the computer-readable instructions, when executed by a processor, implementing operations of the method according any one of claims 1 to 11.
